# EUROPÄISCHE PATENTANMELDUNG

(11) **EP 4 715 019 A1**
(43) Veröffentlichungstag der Anmeldung: **25.03.2026**
(21) Anmeldenummer: 25201565.6
(22) Anmeldetag: 11.09.2025
(51) Int. Cl.: C09J 7/35, C09J 9/02, C09J 11/02, C09J 5/06

(54) **KLEBEBAND MIT EINER ELEKTRISCH LÖSBAREN KLEBEMASSESCHICHT, VERBUND, VERFAHREN UND VERWENDUNG**

(30) Priorität: 19.09.2024 EP 24201238
(71) Anmelder: TESA SE, 22848 Norderstedt (DE)
(72) Erfinder: KEITE-TELGENBÜSCHER, Klaus, 22529 Hamburg (DE); WANG, Shuang, 22848 Norderstedt (DE)
(74) Vertreter: tesa SE

(57) **Zusammenfassung**

Dargestellt und beschrieben ist ein Klebeband (1), das mehrere miteinander verbundene Schichten aufweist, wobei eine erste Schicht (5) der mehreren Schichten eine elektrisch lösbare Klebemasseschicht ist und eine senkrecht zu einer Erstreckungsebene der ersten Schicht (5) gemessene erste Dicke (11) aufweist, wobei mindestens eine zweite Schicht (7) der mehreren Schichten vorgesehen ist, wobei jede zweite Schicht (7) eine elektrisch leitfähige Trägerschicht ist und eine senkrecht zu einer Erstreckungsebene der entsprechenden zweiten Schicht (7) gemessene zweite Dicke (13) aufweist, wobei mindestens eine dritte Schicht (9) der mehreren Schichten vorgesehen ist, wobei jede dritte Schicht (9) eine Klebemasseschicht ist und eine senkrecht zu einer Erstreckungsebene der entsprechenden dritten Schicht (9) gemessene dritte Dicke (15) aufweist, wobei ein Verhältnis der Summe von der ersten Dicke (11) und jeder zweiten Dicke (13) zu der Summe von jeder dritten Dicke (15) gleich oder geringer als 1,0 ist. Außerdem sind ein Verbund (3), ein Verfahren und eine Verwendung dargestellt und beschrieben.

## Beschreibung

Die vorliegende Erfindung betrifft ein Klebeband mit einer elektrisch lösbaren Klebemasseschicht, einen Verbund, ein Verfahren und eine Verwendung.

Klebebänder mit einer elektrisch lösbaren Klebemasseschicht sind aus dem Stand der Technik bekannt. Diese Klebebänder weisen zumindest eine elektrisch lösbare Klebemasseschicht auf, deren Klebkraft durch Anlegen einer elektrischen Spannung reduziert werden kann.

Generell ist es wünschenswert, Klebebänder mit einer elektrisch lösbaren Klebemasseschicht bereitzustellen, die mechanisch besonders robust sind und insbesondere eine hohe Schlagzähigkeit aufweisen.

Es ist daher die Aufgabe der vorliegenden Erfindung, Klebebänder mit einer elektrisch lösbaren Klebemasseschicht bereitzustellen, die mechanisch besonders robust sind und insbesondere eine hohe Schlagzähigkeit aufweisen. Dies ist eine komplexe Aufgabe, da naturgemäß jeder Bestandteil eines Klebebandes einen Einfluss auf die mechanische Robustheit hat.

Gemäß einem ersten Aspekt der Erfindung wird die genannte Aufgabe durch ein Klebeband mit den Merkmalen des Patentanspruchs 1 gelöst. Das Klebeband weist mehrere miteinander verbundene Schichten auf. Eine erste Schicht der mehreren Schichten ist eine elektrisch lösbare Klebemasseschicht und weist eine senkrecht zu einer Erstreckungsebene der ersten Schicht gemessene erste Dicke auf. Mindestens eine zweite Schicht der mehreren Schichten ist vorgesehen. Jede zweite Schicht ist eine elektrisch leitfähige Trägerschicht und weist eine senkrecht zu einer Erstreckungsebene der entsprechenden zweiten Schicht gemessene zweite Dicke auf. Außerdem ist mindestens eine dritte Schicht der mehreren Schichten vorgesehen. Jede dritte Schicht ist eine Klebemasseschicht und weist eine senkrecht zu einer Erstreckungsebene der entsprechenden dritten Schicht gemessene dritte Dicke auf. Ein Verhältnis der Summe von der ersten Dicke und jeder zweiten Dicke zu der Summe von jeder dritten Dicke ist gleich oder geringer als 1,0.

Wie bereits beschrieben weist das Klebeband die mehreren miteinander verbundenen Schichten auf. Bevorzugt weist das Klebeband eine Trägerschicht auf, die auf einer ersten Seite der Trägerschicht mit einer ersten Klebemasseschicht verbunden ist und auf einer der ersten Seite gegenüberliegenden Seite der Trägerschicht mit einer zweiten Klebemasseschicht verbunden ist. Bevorzugt ist die erste Klebemasseschicht die elektrisch lösbare Klebemasseschicht der bereits erwähnten ersten Schicht und die zweite Klebemasseschicht ist die Klebemasseschicht einer dritten Schicht der bereits erwähnten mindestens einen dritten Schicht. Bevorzugt weist das Klebeband zwei Trägerschichten auf, die jeweils auf einer ersten Seite der entsprechenden Trägerschicht mit einer ersten Klebemasseschicht verbunden ist und auf einer der ersten Seite gegenüberliegenden Seite der entsprechenden Trägerschicht mit einer zweiten Klebemasseschicht verbunden ist. Bevorzugt ist die erste Klebemasseschicht die elektrisch lösbare Klebemasseschicht der bereits erwähnten ersten Schicht und die zweite Klebemasseschicht ist die Klebemasseschicht einer entsprechenden dritten Schicht der bereits erwähnten mindestens einen dritten Schicht.

Die bereits erwähnten mehreren Schichten weisen die erste Schicht auf. Bevorzugt ist lediglich eine erste Schicht vorgesehen. Die erste Schicht ist die elektrisch lösbare Klebemasseschicht. Mithilfe der elektrisch lösbaren Klebemasseschicht kann die Klebkraft der elektrisch lösbaren Klebemasseschicht durch Anlegen einer elektrischen Spannung reduziert werden. Wenn im Zusammenhang mit der vorliegenden Erfindung eine elektrische Spannung angelegt wird und mithilfe der elektrischen Spannung die Klebkraft der elektrisch lösbaren Klebemasseschicht oder einer elektrisch lösbaren Klebemasseschicht reduziert wird, wird die elektrische Spannung bevorzugt so an das Klebeband angelegt, dass die elektrische Spannung zumindest abschnittsweise an der entsprechenden elektrisch lösbaren Klebemasseschicht anliegt, sodass zumindest ein Abschnitt der entsprechenden elektrisch lösbaren Klebemasseschicht der elektrischen Spannung ausgesetzt ist oder zumindest einem Anteil der elektrischen Spannung ausgesetzt ist. Bevorzugt ist in einem verbundenen Zustand des Klebebands die elektrisch lösbare Klebemasseschicht auf einer ersten Seite der elektrisch lösbaren Klebemasseschicht mit einer zweiten Schicht verbunden, die eine elektrisch leitfähige Trägerschicht ist, und auf einer der ersten Seite gegenüberliegenden zweiten Seite der elektrisch lösbaren Klebemasseschicht mit einer weiteren Komponente verbunden, die entweder eine weitere zweite Schicht ist, die ebenfalls eine elektrisch leitfähige Trägerschicht ist, oder ein Substrat ist. Durch Anlegen der elektrischen Spannung, insbesondere senkrecht zur Erstreckungsebene der elektrisch lösbaren Klebemasseschicht, kann das Klebeband in einen gelösten Zustand verbracht werden, da die Klebkraft der elektrisch lösbaren Klebemasseschicht durch die angelegte elektrische Spannung reduziert werden kann und somit die Verbindung zwischen der elektrisch lösbaren Klebemasseschicht und der zweiten Schicht und/oder die Verbindung zwischen der elektrisch lösbaren Klebemasseschicht und der weiteren Komponente, die entweder die weitere zweite Schicht ist oder das Substrat ist, aufgehoben oder zumindest geschwächt werden kann.

Die erste Schicht weist die senkrecht zu der Erstreckungsebene der ersten Schicht gemessene erste Dicke auf. Die erste Schicht erstreckt sich also in der Erstreckungsebene der ersten Schicht. Bevorzugt ist die erste Schicht verformbar und erstreckt sich in einem unverformten Zustand in der Erstreckungsebene. In der Erstreckungsebene kann eine Länge und eine Breite der ersten Schicht definiert sein. Die erste Dicke ist durch eine Erstreckung der ersten Schicht senkrecht zu der Erstreckungsebene definiert. Dadurch, dass die erste Dicke senkrecht zu der Erstreckungsebene der ersten Schicht gemessen ist, ist zu verstehen, dass die erste Dicke durch eine Erstreckung der ersten Schicht definiert ist, die senkrecht zu der Erstreckung verläuft, die die Länge der ersten Schicht definiert, und senkrecht zu der Erstreckung verläuft, die die Breite der ersten Schicht definiert.

Die mehreren Schichten weisen mindestens die eine zweite Schicht auf. Bevorzugt ist lediglich eine zweite Schicht vorgesehen. Dieser Fall kann auch so beschrieben werden, dass die mindestens eine zweite Schicht aus einer zweiten Schicht besteht. Alternativ bevorzugt sind lediglich zwei zweite Schichten vorgesehen. Dieser Fall kann auch so beschrieben werden, dass die mindestens eine zweite Schicht aus zwei zweiten Schichten besteht. Jede zweite Schicht ist eine elektrisch leitfähige Trägerschicht. Dadurch, dass die Trägerschicht elektrisch leitfähig ausgebildet ist, kann die elektrisch lösbare Klebemasseschicht mithilfe der elektrisch leitfähigen Trägerschicht elektrisch kontaktiert werden, sodass zumindest ein Abschnitt der Spannungsquelle mit der elektrisch leitfähigen Trägerschicht verbunden werden kann und die elektrische Spannung bereitgestellt werden kann, sodass die Klebkraft der elektrisch lösbaren Klebemasseschicht reduziert werden kann. Insbesondere kann dadurch, dass die Trägerschicht elektrisch leitfähig ausgebildet ist, die elektrisch lösbare Klebemasseschicht auf einer ersten Seite der elektrisch lösbaren Klebemasseschicht mithilfe einer ersten elektrisch leitfähigen Trägerschicht elektrisch kontaktiert werden und die elektrisch lösbare Klebemasseschicht auf einer zweiten Seite der elektrisch lösbaren Klebemasseschicht mithilfe einer zweiten elektrisch leitfähigen Trägerschicht elektrisch kontaktiert werden, sodass zumindest ein erster Abschnitt der Spannungsquelle mit der ersten elektrisch leitfähigen Trägerschicht verbunden werden kann und ein zweiter Abschnitt der Spannungsquelle mit der zweiten elektrisch leitfähigen Trägerschicht verbunden werden kann und die elektrische Spannung so bereitgestellt werden kann, dass die Klebkraft der elektrisch lösbaren Klebemasseschicht reduziert werden kann. Bevorzugt gilt im Rahmen der vorliegenden Erfindung eine Schicht dann als "elektrisch leitfähig", wenn die elektrische Leitfähigkeit der Schicht größer als 10⁵ S/m ist. Bevorzugt weist die elektrisch leitfähige Trägerschicht ein Metall und/oder eine Metalllegierung auf. Bevorzugt ist das Metall ausgewählt aus der Gruppe bestehend aus Kupfer, Nickel, Zink, Zinn, Silber, Gold, Aluminium, Eisen, und Chrom. Ganz besonders bevorzugt ist das Metall ausgewählt aus der Gruppe bestehend aus Aluminium, Kupfer und Nickel. Die Metalllegierung ist bevorzugt ausgewählt aus der Gruppe bestehend aus Metalllegierungen aufweisend Kupfer, Nickel, Zink, Zinn, Silber, Gold, Aluminium, Eisen, und/oder Chrom.

Die elektrisch leitfähige Trägerschicht weist bevorzugt eine Metallfolie, bevorzugt eine Aluminiumfolie; und/oder ein elektrisch leitfähiges Textil aufweisend wenigstens ein Metall, bevorzugt ausgewählt aus der Gruppe bestehend aus Kupfer und Nickel; und/oder eine oder mehrere Lagen wenigstens eines aufgedampften Metalls, bevorzugt ausgewählt aus der Gruppe bestehend aus Kupfer und Aluminium; und/oder wenigstens ein Gitter aus Metall und/oder eine mit Metall bedampfte Folie auf.

Als Folienträger eingesetzt werden Polymerfolien, die einschichtig aber auch mehrschichtig sein können, wobei ein mehrschichtiger Aufbau durch Coextrusion, Kaschierung mittels eines Klebers oder durch Extrusionsbeschichtung erfolgen kann. Zur Herstellung der Polymerfolien können aus allen gängigen zur Folienherstellung verwendeten Kunststoffen bestehen, beispielhaft aber nicht einschränkend erwähnt seien: Polyethylen - insbesondere HDPE, MDPE, LDPE, LLDPE, oder Co- und Blockcopolymere des Ethylens, Polypropylen - insbesondere das durch mono-oder biaxiale Streckung erzeugte orientierte Polypropylen (OPP), wobei als Polymer HOMO-PP, HECO-PP oder rPP verwendet werden kann, lonomere auf Basis von Ethylen oder Propylen, MSA-gepropfte Polymere, Cyclische Olefin Copolymere (COC), Polyvinylchlorid (PVC), Polyester - insbesondere biaxial verstrecktes Polyethylenterephthalat (PET) und Poylethylennaphthalat (PEN), Ethylenvinylalkohol (EVOH), Polyethylenvinylacetat (EVA), Polyvinylidenchlorid (PVDC), Polyvinylidenfluorid (PVDF), Polyacrylnitril (PAN), Polycarbonat (PC), Polyamid (PA), Celluloseacetat, Polymethylmethacrylat (PMMA), Polyvinylalkohol, Polyurethan (PU), Polyethersulfon (PES), Papier oder Polyimid (PI). Die vorgenannten beispielhaften Polymere können als 100%-System, als Blend mit einem oder mehreren weiteren der vorgenannten beispielhaften Polymere oder in Kombination mit weiteren Additiven wie zum Beispiel Füllstoffen, Schäumungsmitteln, Antioxidantien, Gleitmitteln, Antiblockmitteln, Farbstoffen, Pigmenten verwendet werden.

Die Folie kann eine durchgängige oder eine durchbrochene Schicht ausbilden, sie kann ungeschäumt oder geschäumt sein. Bevorzugt ist die Folie ungeschäumt, um ein Spalten des Klebebands bei Belastung zu vermeiden.

Das elektrisch leitfähige Textil kann auch als "conductive mesh" bezeichnet werden. Das elektrisch leitfähige Textil weist bevorzugt ein textiles Gewebe auf, zum Beispiel ein aus PET (Polyethylenterephthalat) gebildetes Gewebe, welches mit einem Metall, zum Beispiel Kupfer und/oder Nickel, beschichtet ist, wodurch die elektrische Leitfähigkeit des Gewebes hergestellt ist. Bevorzugt liegt das Metall oder die Metalllegierung jeder zweiten Schicht zumindest abschnittsweise an der ersten Schicht und somit an der elektrisch lösbaren Klebemasseschicht an, sodass eine elektrische Kontaktierung zwischen dem Metall oder der Metalllegierung jeder zweiten Schicht und der ersten Schicht gewährleistet ist. Dies ist insbesondere dann vorteilhaft, wenn die elektrisch leitfähige Trägerschicht jeder zweiten Schicht eine elektrisch leitfähige Metallbeschichtung oder mehrere elektrisch leitfähige Metallbeschichtungen aufweist, wie beispielsweise eine elektrisch leitfähige Metallbeschichtung einer metallbedampften Folie oder mehrere elektrisch leitfähige Metallbeschichtungen mehrerer metallbedampfter Folien oder mehrere elektrisch leitfähige Metallbeschichtungen mehrerer metallbedampfter Textilien. Alternativ bevorzugt ist zwischen dem Metall oder der Metalllegierung und jeder zweiten Schicht eine weitere Schicht, insbesondere eine Schicht zum Schutz des Metalls oder der Metalllegierung vor Korrosion, angeordnet, die eine Dicke von 100 nm oder weniger als 100 nm aufweist. Jede zweite Schicht weist die senkrecht zu der Erstreckungsebene der entsprechenden zweiten Schicht gemessene zweite Dicke auf. Jede zweite Schicht erstreckt sich also in einer entsprechenden Erstreckungsebene der entsprechenden zweiten Schicht. Bevorzugt ist jede zweite Schicht verformbar und erstreckt sich in einem unverformten Zustand in der Erstreckungsebene. In der jeweiligen Erstreckungsebene kann eine Länge und eine Breite der entsprechenden zweiten Schicht definiert sein. Die zweite Dicke ist durch eine Erstreckung der entsprechenden zweiten Schicht senkrecht zu der Erstreckungsebene definiert. Dadurch, dass die zweite Dicke senkrecht zu der Erstreckungsebene der zweiten Schicht gemessen ist, ist zu verstehen, dass die zweite Dicke durch eine Erstreckung der zweiten Schicht definiert ist, die senkrecht zu der Erstreckung verläuft, die die Länge der zweiten Schicht definiert, und senkrecht zu der Erstreckung verläuft, die die Breite der zweiten Schicht definiert. Bevorzugt verlaufen die Erstreckungsebene der ersten Schicht und die Erstreckungsebene jeder zweiten Schicht in einem unverformten Zustand des Klebebands parallel zueinander.

Die mehreren Schichten weisen außerdem mindestens eine dritte Schicht auf. Bevorzugt ist lediglich eine dritte Schicht vorgesehen. Dieser Fall kann auch so beschrieben werden, dass die mindestens eine dritte Schicht aus einer dritten Schicht besteht. Alternativ bevorzugt sind lediglich zwei dritte Schichten vorgesehen. Dieser Fall kann auch so beschrieben werden, dass die mindestens eine dritte Schicht aus zwei dritten Schichten besteht. Jede dritte Schicht ist eine Klebemasseschicht. Mithilfe der Klebemasseschicht kann jede dritte Schicht mit einer weiteren Komponente, wie beispielsweise einem ersten Substrat oder einem zweiten Substrat, so verbunden werden, dass in einem verbundenen Zustand eine Klebkraft bereitgestellt wird, die die entsprechende dritte Schicht und die mit der entsprechenden dritten Schicht verbundene Komponente in dem verbundenen Zustand hält. Wenn beispielsweise lediglich eine dritte Schicht vorgesehen ist, kann die erste Schicht mit einem ersten Substrat verbunden sein und die dritte Schicht kann mit einem zweiten Substrat verbunden sein, sodass das Klebeband das erste Substrat mit dem zweiten Substrat verbindet. Wenn beispielsweise lediglich zwei dritte Schichten vorgesehen sind, kann eine erste dritte Schicht mit dem ersten Substrat verbunden sein und eine zweite dritte Schicht kann mit dem zweiten Substrat verbunden sein, sodass das Klebeband das erste Substrat mit dem zweiten Substrat verbindet. Durch Bereitstellen der elektrischen Spannung und Reduzieren der Klebkraft der elektrisch lösbaren Klebemasseschicht können dann das erste Substrat und das zweite Substrat wieder voneinander gelöst werden. Das gezielte Lösen des ersten Substrats und des zweiten Substrats voneinander kann auch als "Debonding-on-Demand" bezeichnet werden. Somit kann mithilfe des Klebebands beispielsweise die Reparatur und das Recycling von Komponenten, die mithilfe des Klebebands miteinander verbunden werden vereinfacht werden. Bevorzugt weist jede dritte Schicht eine Klebemasseschicht auf, die elektrisch nicht lösbar ist. Beim Anlegen einer elektrischen Spannung an die elektrisch nicht lösbare Klebemasseschicht, wird die Klebkraft der elektrisch nicht lösbaren Klebemasseschicht bevorzugt nicht reduziert.

Jede dritte Schicht weist die senkrecht zu der Erstreckungsebene der entsprechenden dritten Schicht gemessene dritte Dicke auf. Jede dritte Schicht erstreckt sich also in einer entsprechenden Erstreckungsebene der entsprechenden dritten Schicht. Bevorzugt ist jede dritte Schicht verformbar und erstreckt sich in einem unverformten Zustand in der Erstreckungsebene. In der jeweiligen Erstreckungsebene kann eine Länge und eine Breite der entsprechenden dritten Schicht definiert sein. Die dritte Dicke ist durch eine Erstreckung der entsprechenden dritten Schicht senkrecht zu der Erstreckungsebene definiert. Dadurch, dass die dritte Dicke senkrecht zu der Erstreckungsebene der dritten Schicht gemessen ist, ist zu verstehen, dass die dritte Dicke durch eine Erstreckung der dritten Schicht definiert ist, die senkrecht zu der Erstreckung verläuft, die die Länge der dritten Schicht definiert, und senkrecht zu der Erstreckung verläuft, die die Breite der dritten Schicht definiert. Bevorzugt verlaufen die Erstreckungsebene der ersten Schicht, die Erstreckungsebene jeder zweiten Schicht, und die Erstreckungsebene jeder dritten Schicht in einem unverformten Zustand des Klebebands parallel zueinander.

Ein wesentlicher Unterschied zwischen dem erfindungsgemäßen Klebeband und aus dem Stand der Technik bekannten Klebebändern ist, dass das Verhältnis der Summe von der ersten Dicke und jeder zweiten Dicke zu der Summe von jeder dritten Dicke gleich oder geringer als 1,0 ist. Es hat sich herausgestellt, dass sich dann, wenn das Verhältnis der Summe von der ersten Dicke und jeder zweiten Dicke zu der Summe von jeder dritten Dicke gleich oder geringer als 1,0 ist, die Schlagzähigkeit des Klebebands durch ein Ändern des Verhältnisses besonders gut beeinflussen lässt. Insbesondere dann, wenn das Verhältnis der Summe von der ersten Dicke und jeder zweiten Dicke zu der Summe von jeder dritten Dicke gleich oder geringer als 1,0 ist, konnte die Schlagzähigkeit des Klebebands im Vergleich zu Klebebändern, bei denen das Verhältnis größer als 1,0 ist, deutlich erhöht werden. Mit abnehmendem Verhältnis kann die Schlagzähigkeit des Klebebands besonders stark erhöht werden. Dadurch, dass das Verhältnis der Summe von der ersten Dicke und jeder zweiten Dicke zu der Summe von jeder dritten Dicke gleich oder geringer als 1,0 ist, kann also ein mechanisch besonders robustes Klebeband mit einer elektrisch lösbaren Klebemasseschicht bereitgestellt werden. Dies ist überraschend, da jeder Bestandteil eines Klebebandes, der einen Einfluss auf die mechanische Robustheit hat, also auch die elektrisch leitfähige(n) Trägerschicht(en) einbezogen werden müssen und zumindest drei Schichten in ihrer Dicke aufeinander abgestimmt sein müssen. Insbesondere das Einbeziehen der Trägerschicht(en) führt erfindungsgemäß zu besonders dicken bzw. besonders dünnen Klebemasseschichtdicken innerhalb eines Klebebandaufbaus, die der Fachmann zunächst als unausgewogen verworfen hätte.

Zusammenfassend kann also festgestellt werden, dass mithilfe der vorliegenden Erfindung ein mechanisch besonders robustes Klebeband mit einer elektrisch lösbaren Klebemasseschicht bereitgestellt werden kann.

In einer Ausführungsform ist das Verhältnis größer als 0,1. Dadurch, dass das Verhältnis größer als 0,1 ist, kann die elektrische Lösbarkeit der elektrisch lösbaren Klebemasseschicht der ersten Schicht und die elektrische Leitfähigkeit der elektrisch leitfähigen Trägerschicht der zweiten Schicht besonders zuverlässig gewährleistet werden. Bevorzugt ist das Verhältnis größer als 0,1 und gleich oder geringer als 1,0. Ein Verhältnis größer als 0,1 und gleich oder geringer als 1,0 hat eine besonders hohe Schlagzähigkeit des Klebebands gewährleistet und gleichzeitig die elektrische Lösbarkeit der elektrisch lösbaren Klebemasseschicht der ersten Schicht und die elektrische Leitfähigkeit der elektrisch leitfähigen Trägerschicht der zweiten Schicht besonders zuverlässig gewährleistet. Besonders bevorzugt ist das Verhältnis größer als 0,25 und gleich oder geringer als 0,95. Ein Verhältnis größer als 0,25 und gleich oder geringer als 0,95 hat eine besonders hohe Schlagzähigkeit des Klebebands gewährleistet und gleichzeitig die elektrische Lösbarkeit der elektrisch lösbaren Klebemasseschicht der ersten Schicht und die elektrische Leitfähigkeit der elektrisch leitfähigen Trägerschicht der zweiten Schicht noch zuverlässiger gewährleistet. Eine besonders hohe Schlagzähigkeit hat sich bei einem Verhältnis von gleich oder geringer als 0,75 eingestellt.

Die erste und jede dritte Schicht können jeweils grundsätzlich in einer Dicke von etwa 1 bis etwa 2000 µm ausgeführt werden. Die erste Schicht weist bevorzugt eine Dicke im Bereich von 10 µm bis 100 µm auf. Die untere Grenze wird durch die zuverlässige elektrische Lösbarkeit bevorzugt, die obere Grenze aus wirtschaftlichen Gründen, um das Volumen der durch die erforderlichen Inhaltstoffe teuren Schicht gering zu halten. Besonders bevorzugt ist für die erste Schicht eine Dicke von 10 bis 30 µm. Jede zweite Schicht kann grundsätzlich in einer Dicke von etwa 0,05 bis etwa 200 µm ausgeführt werden. Bevorzugt weist jede zweite Schicht eine Dicke im Bereich 1 bis 30 µm auf, um einerseits genügend innere Festigkeit, andererseits eine vorteilhafte Flexibilität zu erreichen.

In einer Ausführungsform bestehen die mehreren miteinander verbundenen Schichten aus der ersten Schicht, einer zweiten Schicht und einer dritten Schicht. Wenn die mehreren miteinander verbundenen Schichten aus der ersten Schicht, der zweiten Schicht und der dritten Schicht bestehen, dann kann die erste Schicht mit einem ersten Substrat verbunden sein und die dritte Schicht kann mit einem zweiten Substrat verbunden sein, sodass das Klebeband das erste Substrat mit dem zweiten Substrat verbindet. Wenn die mehreren miteinander verbundenen Schichten aus der ersten Schicht, der zweiten Schicht und der dritten Schicht bestehen, wird ein besonders einfacher Aufbau des Klebebands bereitgestellt. Bevorzugt sind dann, wenn die mehreren miteinander verbundenen Schichten aus der ersten Schicht, der zweiten Schicht und der dritten Schicht bestehen, die mehreren miteinander verbundenen Schichten so miteinander verbunden, dass die zweite Schicht auf einer ersten Seite der zweiten Schicht mit der ersten Schichten verbunden ist und die zweite Schicht auf einer der ersten Seite gegenüberliegenden zweiten Seite der zweiten Schicht mit der dritten Schicht verbunden ist.

In einer Ausführungsform bestehen die mehreren miteinander verbundenen Schichten aus der ersten Schicht, zwei zweiten Schichten und zwei dritten Schichten. Wenn die mehreren miteinander verbundenen Schichten aus der ersten Schicht, zwei zweiten Schichten und zwei dritten Schichten bestehen, dann kann eine erste dritte Schicht mit einem ersten Substrat verbunden sein und eine zweite dritte Schicht kann mit einem zweiten Substrat verbunden sein, sodass das Klebeband das erste Substrat mit dem zweiten Substrat verbindet. Wenn die mehreren miteinander verbundenen Schichten aus der ersten Schicht, zwei zweiten Schichten und zwei dritten Schichten bestehen, kann das Klebeband für bestimmte Einsatzzwecke besonders flexibel angepasst werden, da zum Beispiel die zwei dritten Schichten gleich oder unterschiedlich ausgebildet sein können. Bevorzugt sind dann, wenn die mehreren miteinander verbundenen Schichten aus der ersten Schicht, zwei zweiten Schichten und zwei dritten Schichten bestehen, die mehreren miteinander verbundenen Schichten so miteinander verbunden, dass die erste Schicht auf einer ersten Seite der ersten Schicht mit einer ersten zweiten Schicht der zwei zweiten Schichten verbunden ist und die erste Schicht auf einer der ersten Seite gegenüberliegenden zweiten Seite der ersten Schicht mit einer zweiten zweiten Schicht der zwei zweiten Schichten verbunden ist. Außerdem sind bevorzugt dann, wenn die mehreren miteinander verbundenen Schichten aus der ersten Schicht, zwei zweiten Schichten und zwei dritten Schichten bestehen, die mehreren miteinander verbundenen Schichten so miteinander verbunden, dass die erste zweite Schicht auf einer ersten Seite der ersten zweiten Schicht mit der ersten Schicht verbunden ist und die erste zweite Schicht auf einer der ersten Seite gegenüberliegenden zweiten Seite der ersten zweiten Schicht mit einer ersten dritten Schicht der zwei dritten Schichten verbunden ist. Außerdem sind bevorzugt dann, wenn die mehreren miteinander verbundenen Schichten aus der ersten Schicht, zwei zweiten Schichten und zwei dritten Schichten bestehen, die mehreren miteinander verbundenen Schichten so miteinander verbunden, dass die zweite zweite Schicht auf einer ersten Seite der ersten zweiten Schicht mit der ersten Schicht verbunden ist und die zweite zweite Schicht auf einer der ersten Seite gegenüberliegenden zweiten Seite der zweiten zweiten Schicht mit einer zweiten dritten Schicht der zwei dritten Schichten verbunden ist.

In einer Ausführungsform weist die elektrisch lösbare Klebemasseschicht einen Elektrolyt auf. Der Elektrolyt hat den Vorteil, dass die elektrische Lösbarkeit der Klebmasseschicht besonders einfache eingestellt werden kann.

In einer Ausführungsform ist der Elektrolyt ausgewählt aus der Gruppe bestehend aus ionischen Flüssigkeiten und Metallsalzen. Ionische Flüssigkeiten und Metallsalze sind besonders vorteilhafte Elektrolyten.

Ionische Flüssigkeiten sind im Rahmen der vorliegenden Erfindung bevorzugt. Sie sind Salze, die bei einer Temperatur von weniger als 100 °C, insbesondere bei Raumtemperatur, also 23 °C, flüssig sind. Ionische Flüssigkeiten enthalten dementsprechend Anionen und Kationen. Im Rahmen der vorliegenden Erfindung sind prinzipiell alle ionischen Flüssigkeiten geeignet.

Bevorzugt ist das Anion der ionischen Flüssigkeit ausgewählt aus der Gruppe bestehend aus Br⁻, AlCl₄⁻, Al₂Cl₇, NO₃⁻, BF₄⁻, PF₆⁻, CH₃COO⁻, CF₃COO⁻, CF₃CO₃⁻, CF₃SO₃⁻, (CF₃SO₂)₂N⁻, (CF₃SO₂)₃⁻, ASF₆⁻, SbF₆⁻, CF₃(CF₂)₃SO₃⁻ (CF₃CF₂SO₂)₂N⁻, CF₃CF₂CF₂COO⁻, (FSO₂)₂N⁻. Besonders bevorzugt ist das Anion ausgewählt aus der Gruppe bestehend aus (CF₃SO₂)₂N⁻ und (FSO₂)₂N⁻.

Bevorzugt ist das Kation der ionischen Flüssigkeit ausgewählt aus der Gruppe bestehend aus Kationen auf Imidazolium-Basis, Kationen auf Pyridinium-Basis, Kationen auf Pyrrolidin-Basis und Kationen auf Ammonium-Basis. Besonders bevorzugt ist das Kation ausgewählt aus der Gruppe bestehend aus Kationen auf Imidazolium-Basis.

Ganz besonders bevorzugt ist das Kation ausgewählt aus der Gruppe bestehend aus 1-Ethyl-3-methylimidazolium und 1-Butyl-3-methylimidazolium. Wiederum bevorzugt ist das Kation 1-Ethyl-3-methylimidazolium.

Besonders bevorzugt ist der Elektrolyt ausgewählt aus der Gruppe bestehend aus den ionischen Flüssigkeiten 1-Ethyl-3-methylimidazolium-bis(trifluormethylsulfonyl)imid (EMIM-TFSI) und 1-Ethyl-3-methylimidazolium bis(fluorsulfonyl)imid (EMIM-FSI).

Beispiele für Metallsalze, die in der elektrisch lösbaren Klebemasseschicht enthalten sein können, umfassen Ammonium-, Alkalimetall-, Erdalkalimetall- oder Seltenerdmetallsalze von Perchlorat, Tetrafluoroborat, Hexafluorotitanat, Hexafluorophosphat, Hexafluoroantimonat, Trifluormethansulfonimid, Trifluormethansulfonat und Bis(trifluormethylsulfonyl)imid Anionen; sowie Salze von organischen Säuren, beispielsweise Lithium, Natrium oder Kalium Salze von aliphatischen C₂ bis C₆ Mono- oder Di-Carbonsäuren, und aromatischen Mono- oder Di-Carbonsäuren; und Ammonium- oder Natriumsalzen von Polyoxyethylen Diphenylethersulfat, wie zum Beispiel Natrium Laurethsulfat (SLES); sowie Gemische dieser Salze. Bevorzugte Metallsalze umfassen Lithium Bis(trifluormethylsulfonyl)imid, Lithiumperchlorat, Natriumperchlorat, Natrium Hexafluorotitanat und Natrium Laurethsulfat.

In einer Ausführungsform weist die elektrisch lösbare Klebemasseschicht eine hitzeaktivierbare Klebemasse auf. Dadurch, dass die elektrisch lösbare Klebemasseschicht die hitzeaktivierbare Klebemasse aufweist, kann die elektrisch lösbare Klebemasseschicht eine besonders hohe Verklebungsfestigkeit nach Aktivierung bereitstellen, sodass besonders große Klebkräfte bereitgestellt werden können. Bevorzugt ist die hitzeaktivierbare Klebmasse eine physikalisch hitzeaktivierbare Klebemassen. Alternativ bevorzugt ist die hitzeaktivierbare Klebmasse eine reaktive hitzeaktivierbare Klebemasse. Wenn die hitzeaktivierbare Klebmasse eine physikalisch hitzeaktivierbare Klebemasse ist, kann die Klebmasse auch als "Schmelzklebemasse" bezeichnet werden. Die physikalisch hitzeaktivierbare Klebemasse ist bevorzugt bei Raumtemperatur nicht oder schwach selbstklebend. Bevorzugt wird die Klebemasse erst mit Wärmezufuhr aktiviert und dabei selbstklebrig. Bevorzugt liegt die Aktivierungstemperatur zur Erzielung einer hinreichenden Klebrigkeit - in der Regel einige zig bis hundert Grad Celsius - oberhalb der Raumtemperatur. Bevorzugt tritt bereits vor dem Abbinden der Masse aufgrund der selbstklebenden Eigenschaften eine Klebewirkung ein. Bevorzugt bindet nach dem Zusammenfügen der Klebepartner die physikalisch hitzeaktivierbare Klebemasse beim Abkühlen unter Verfestigung physikalisch ab, sodass die Klebewirkung im abgekühlten Zustand erhalten bleibt und dort die eigentlichen Klebkräfte ausgebildet hat. Bevorzugt wird die Verbindung zweier zu verklebender Materialien fester je mehr Wärme, Druck und/oder Zeit bei der Verklebung angewandt wird. Mithilfe von physikalisch hitzeaktivierbaren Klebemassen können besonders hohe Verbundfestigkeiten unter technisch leichten Verarbeitungsbedingungen verwirklicht werden. Durch das physikalische Aufschmelzen wird eine hohe Verklebungsfestigkeit und damit Klebwirkung erzielt. Bevorzugt sind die Massen rein physikalisch hitzeaktivierbare Klebemassen. Wenn die hitzeaktivierbare Klebmasse eine reaktive hitzeaktivierbare Klebemasse ist, kann die hitzeaktivierbare Klebemassen auch als "Reaktivklebemassen" bezeichnet werden. Bevorzugt ist die reaktive hitzeaktivierbare Klebmasse ein Polymersystem, das funktionelle Gruppen derart aufweist, dass bei Wärmezufuhr eine chemische Reaktion stattfindet, wobei die Klebemasse chemisch abbindet, was eine höhere innere Festigkeit hervorruft. Gleichfalls kann es vorteilhaft sein, die Reaktivklebemassen derart auszugestalten, dass sie bei erhöhter Temperatur weicher und/oder fließfähiger werden, um sich geometrisch dem Klebverbund optimal anzupassen; dies wird insbesondere und bevorzugt durch eine thermoplastische Komponente erreicht. Durch die genannte chemische Reaktion und auch das physikalische Aufschmelzen wird eine hohe Verklebungsfestigkeit und damit Klebwirkung erzielt.

Bevorzugt umfasst die elektrisch lösbare erste Klebstoffschicht oder die elektrisch lösbare Klebemasseschicht der ersten Schicht einen aktivierbaren Klebstoff. Mittels aktivierbarer Klebstoffe kann die Schicht besonders dünn ausgeführt werden, insbesondere da aktivierbare Klebstoff eine höhere Klebfestigkeit als Haftklebstoffe erreichen. Weiterhin weisen aktivierbare Klebstoffe insbesondere nach der Aktivierung einen höheren Speichermodul G' auf als Haftklebstoffe. Dies vermindert bei den erfindungsgemäß gegebenen kleinen Verhältnissen die Gefahr eines elektrischen Kurzschlusses im Schichtaufbau oder bei der Verklebung, der durch Verformung des elektrisch leitfähigen Trägermaterials beim Zuschneiden oder Stanzen eines Klebebandabschnitts auftreten kann. Bevorzugt umfasst die elektrisch lösbare erste Klebstoffschicht oder die elektrisch lösbare Klebemasseschicht der ersten Schicht einen thermisch aktivierbaren Klebstoff (reaktiver Klebstoff). Bevorzugt umfasst die elektrisch lösbare erste Klebstoffschicht oder die elektrisch lösbare Klebemasseschicht der ersten Schicht einen Haftklebstoff. Bevorzugt umfasst die elektrisch lösbare erste Klebstoffschicht oder die elektrisch lösbare Klebemasseschicht der ersten Schicht einen aktivierbaren Haftklebstoff.

In einer Ausführungsform weist die erste Schicht einen Haftklebstoff auf und weist eine geschäumte elektrisch lösbare erste Klebstoffschicht auf. Damit ist die elektrisch lösbare Klebemasseschicht geschäumt. Die Schäumung kann mittels Mikroballons hergestellt werden. Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit bzw. als Gas sind insbesondere Kohlenwasserstoffe der niederen Alkane, beispielsweise Isobutan oder Isopentan geeignet, die als verflüssigtes Gas unter Druck in der Polymerhülle eingeschlossen sind, wobei Isopentan besonders bevorzugt ist. Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 µm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel^{®} DU-Typen (DU = dry unexpanded) von der Firma Nuryon bzw. die Microsphere^{®} FN-Typen von der Firma Matsumoto.

In einer alternativen Ausführungsform ist die elektrisch lösbare Klebemasseschicht nicht geschäumt, da sie dann einfacher sehr dünn ausgeführt und das erfindungsgemäße Verhältnis einfacher erreicht werden kann.

Bevorzugt weist jede dritte Schicht eine Klebemasseschicht auf, die elektrisch nicht lösbar ist, sodass beim Anlegen einer elektrischen Spannung an die elektrisch nicht lösbare Klebemasseschicht die Klebkraft der elektrisch nicht lösbaren Klebemasseschicht bevorzugt nicht reduziert wird. Bevorzugt weist jede dritte Schicht einen Haftklebstoff und/oder eine geschäumte Klebemasseschicht auf. Damit ist die Klebemasseschicht der dritten Schicht geschäumt. Die Schäumung kann mittels Mikroballons hergestellt werden. Besonders bevorzugt weist jede dritte Schicht eine geschäumte Klebemasseschicht auf, die elektrisch nicht lösbar ist. Bevorzugt weist die Klebemasseschicht jeder dritten Schicht einen Haftklebstoff auf. Bevorzugt weist die Klebemasseschicht jeder dritten Schicht einen aktivierbaren Klebstoff auf, insbesondere einen thermisch aktivierbareren Klebstoff (reaktiver Klebstoff). Bevorzugt weist die Klebemasseschicht jeder dritten Schicht einen aktivierbaren Haftklebstoff auf. Bevorzugt weist die Klebemasseschicht einer ersten dritten Schicht einen Haftklebstoff auf und die Klebemasseschicht einer zweiten dritten Schicht weist einen aktivierbaren Klebstoff auf, insbesondere einen thermisch aktivierbareren Klebstoff (reaktiver Klebstoff). Bevorzugt weist die Klebemasseschicht einer ersten dritten Schicht einen Haftklebstoff auf und die Klebemasseschicht einer zweiten dritten Schicht weist einen aktivierbaren Haftklebstoff auf. Bevorzugt weist die Klebemasseschicht einer ersten dritten Schicht einen aktivierbaren Klebstoff auf, insbesondere einen thermisch aktivierbareren Klebstoff (reaktiver Klebstoff), und die Klebemasseschicht einer zweiten dritten Schicht weist einen Haftklebstoff auf. Bevorzugt weist die Klebemasseschicht einer ersten dritten Schicht einen aktivierbaren Klebstoff auf, insbesondere einen thermisch aktivierbareren Klebstoff (reaktiver Klebstoff), und die Klebemasseschicht einer zweiten dritten Schicht weist einen aktivierbaren Haftklebstoff auf. Bevorzugt weist die Klebemasseschicht einer ersten dritten Schicht einen aktivierbaren Haftklebstoff auf und die Klebemasseschicht einer zweiten dritten Schicht weist einen Haftklebstoff auf. Bevorzugt weist die Klebemasseschicht einer ersten dritten Schicht einen aktivierbaren Haftklebstoff und die Klebemasseschicht einer zweiten dritten Schicht weist einen aktivierbaren Klebstoff auf, insbesondere einen thermisch aktivierbareren Klebstoff (reaktiver Klebstoff). Bevorzugt weist jede dritte Schicht eine Klebemasseschicht auf, die elektrisch lösbar ist, sodass beim Anlegen einer elektrischen Spannung an die elektrisch lösbare Klebemasseschicht die Klebkraft der elektrisch lösbaren Klebemasseschicht reduziert wird. Bevorzugt weist eine erste dritte Schicht eine Klebemasseschicht auf, die elektrisch lösbar ist und eine zweite dritte Schicht weist eine Klebemasseschicht auf, die elektrisch nicht lösbar ist. Bevorzugt weist eine erste dritte Schicht eine Klebemasseschicht auf, die elektrisch nicht lösbar ist und eine zweite dritte Schicht weist eine Klebemasseschicht auf, die elektrisch lösbar ist.

Bevorzugt umfasst die elektrisch lösbare erste Klebstoffschicht oder die elektrisch lösbare Klebemasseschicht der ersten Schicht einen Klebstoff, der vor einer eventuellen Aktivierung einen höheren Speichermodul G' aufweist als der Speichermodul jeder dritten Schicht, wobei jede dritte Schicht bevorzugt eine Klebemasseschicht aufweist, die elektrisch nicht lösbar ist, sodass beim Anlegen einer elektrischen Spannung an die elektrisch nicht lösbare Klebemasseschicht die Klebkraft der elektrisch nicht lösbaren Klebemasseschicht bevorzugt nicht reduziert wird. Besonders bevorzugt ist der Speichermodul der elektrisch lösbaren Klebemasseschicht der ersten Schicht mehr als doppelt so hoch wie der Speichermodul der Klebemasseschicht jeder dritten Schicht. In einer bevorzugten Ausführung liegt der Speichermodul der elektrisch lösbaren Klebemasseschicht der ersten Schicht oberhalb von 0,1 MPa, besonders bevorzugt oberhalb von 1 MPa, ganz besonders bevorzugt oberhalb von 5 MPa.

Gemäß einem zweiten Aspekt der Erfindung wird die genannte Aufgabe durch einen Verbund mit den Merkmalen des Patentanspruchs 10 gelöst. Der Verbund weist ein Klebeband gemäß dem ersten Aspekt der Erfindung auf. Außerdem weist der Verbund ein erstes Substrat und ein zweites Substrat auf. Die erste Schicht des Klebebands ist mit dem ersten Substrat verbunden und eine dritte Schicht der mindestens einen dritten Schicht des Klebebands ist mit dem zweiten Substrat verbunden. Alternativ ist eine dritte Schicht der mindestens einen dritten Schicht des Klebebands mit dem ersten Substrat verbunden und eine weitere dritte Schicht der mindestens einen dritten Schicht des Klebebands ist mit dem zweiten Substrat verbunden. Die im Zusammenhang mit dem Klebeband gemäß dem ersten Aspekt der Erfindung beschriebenen Merkmale, technischen Effekte und/oder Vorteile gelten zumindest in analoger Weise auch für den Verbund gemäß dem zweiten Aspekt der Erfindung, sodass an dieser Stelle auf eine entsprechende Wiederholung verzichtet wird.

Gemäß einem dritten Aspekt der Erfindung wird die genannte Aufgabe durch ein Verfahren mit den Merkmalen des Patentanspruchs 11 gelöst. Das Verfahren ist zum elektrischen Lösen des Verbunds gemäß dem zweiten Aspekt der Erfindung vorgesehen. Das Verfahren weist die folgenden Schritte auf: Kontaktieren eines ersten Abschnitts des Verbunds mit einem ersten Abschnitt einer Spannungsquelle und kontaktieren eines zweiten Abschnitts des Verbunds mit einem zweiten Abschnitt der Spannungsquelle und Bereitstellen einer elektrischen Spannung mithilfe der Spannungsquelle, sodass die elektrische Spannung zwischen dem ersten Abschnitt des Verbunds und dem zweiten Abschnitt des Verbunds anliegt. Wenn die mehreren miteinander verbundenen Schichten aus der ersten Schicht, der zweiten Schicht und der dritten Schicht bestehen, ist der erste Abschnitt des Verbunds bevorzugt ein Abschnitt des ersten Substrats des Verbunds und der zweite Abschnitt des Verbunds ist bevorzugt ein Abschnitt der zweiten Schicht des Klebebands. Wenn die mehreren miteinander verbundenen Schichten aus der ersten Schicht, zwei zweiten Schichten und zwei dritten Schichten bestehen, ist der erste Abschnitt des Verbunds bevorzugt ein Abschnitt einer der zwei zweiten Schichten des Klebebands und der zweite Abschnitt des Verbunds ist bevorzugt ein Abschnitt der anderen der zwei zweiten Schichten des Klebebands. Die im Zusammenhang mit dem Klebeband gemäß dem ersten Aspekt der Erfindung beschriebenen Merkmale, technischen Effekte und/oder Vorteile und die im Zusammenhang mit dem Verbund gemäß dem zweiten Aspekt der Erfindung beschriebenen Merkmale, technischen Effekte und/oder Vorteile gelten zumindest in analoger Weise auch für das Verfahren gemäß dem dritten Aspekt der Erfindung, sodass an dieser Stelle auf eine entsprechende Wiederholung verzichtet wird.

Gemäß einem vierten Aspekt der Erfindung wird die genannte Aufgabe durch eine Verwendung mit den Merkmalen des Patentanspruchs 12 gelöst. Es ist eine Verwendung eines Klebebands gemäß dem ersten Aspekt der Erfindung zum Verkleben von Bauteilen von elektrischen oder elektronischen Geräten, Automobilen oder medizinischen Geräten vorgesehen. Bevorzugt bildet das bereits erwähnte erste Substrat einen ersten Abschnitt des elektrischen oder elektronischen Geräts, des Automobils oder des medizinischen Geräts und das bereits erwähnte zweite Substrat bildet einen zweiten Abschnitt des elektrischen oder elektronischen Geräts, des Automobils oder des medizinischen Geräts. Die im Zusammenhang mit dem Klebeband gemäß dem ersten Aspekt der Erfindung beschriebenen Merkmale, technischen Effekte und/oder Vorteile, die im Zusammenhang mit dem Verbund gemäß dem zweiten Aspekt der Erfindung beschriebenen Merkmale, technischen Effekte und/oder Vorteile und die im Zusammenhang mit dem Verfahren gemäß dem dritten Aspekt der Erfindung beschriebenen Merkmale, technischen Effekte und/oder Vorteile gelten zumindest in analoger Weise auch für die Verwendung gemäß dem vierten Aspekt der Erfindung, sodass an dieser Stelle auf eine entsprechende Wiederholung verzichtet wird.

Auch wenn die Verfahrensschritte in einer bestimmten Reihenfolge beschrieben werden, ist die vorliegende Erfindung nicht auf diese Reihenfolge beschränkt. Vielmehr können die einzelnen Verfahrensschritte in beliebiger sinnvoller Reihenfolg, insbesondere auch zumindest abschnittsweise zeitlich parallel zueinander, durchgeführt werden.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figur 1: zeigt eine schematische Darstellung einer ersten Ausführungsform eines erfindungsgemäßen Klebebands,
- Figur 2: zeigt eine schematische Darstellung einer zweiten Ausführungsform des erfindungsgemäßen Klebebands,
- Figur 3: zeigt eine schematische Darstellung einer ersten Ausführungsform eines erfindungsgemäßen Verbunds,
- Figur 4: zeigt eine schematische Darstellung einer zweiten Ausführungsform des erfindungsgemäßen Verbunds,
- Figur 5: zeigt eine schematische Darstellung einer Ausführungsform eines erfindungsgemäßen Verfahrens zum elektrischen Lösen des erfindungsgemäßen Verbunds, und
- Figur 6: zeigt ein Streudiagramm in dem die Schlagzähigkeit über das Verhältnis von verschiedenen Beispielen von Klebebändern dargestellt ist.

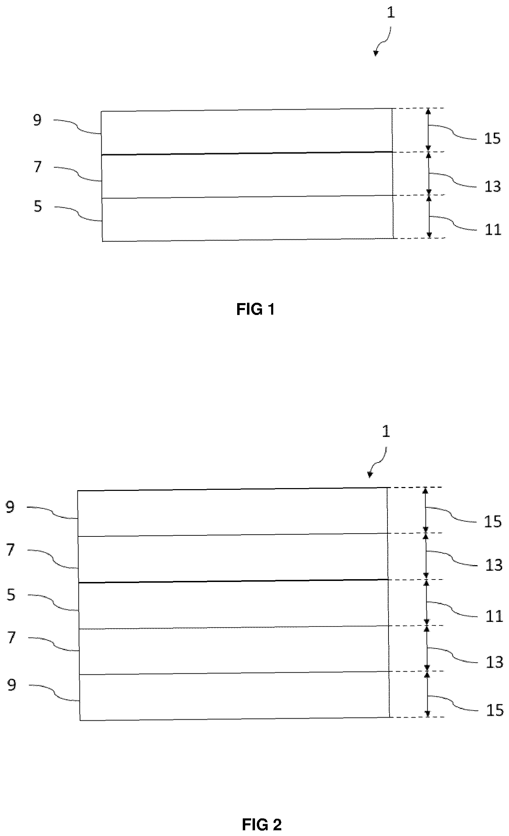

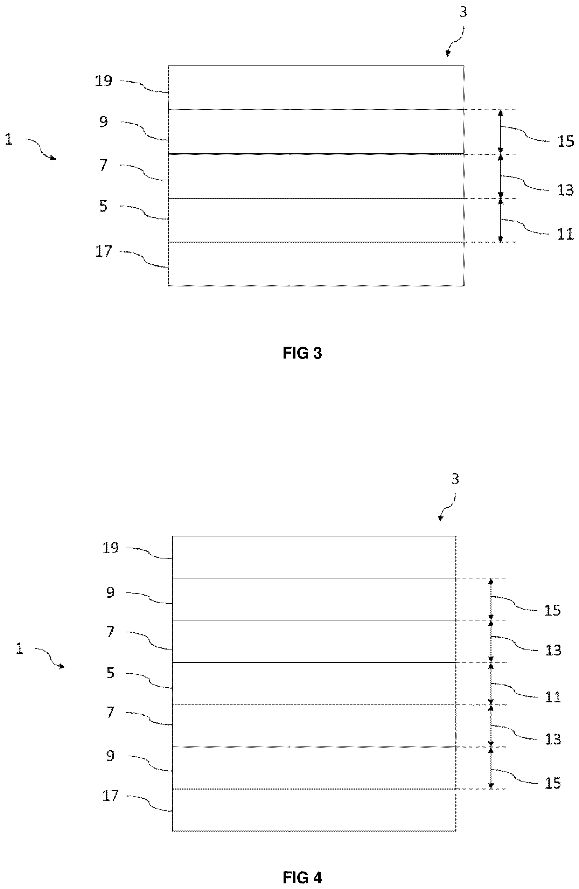

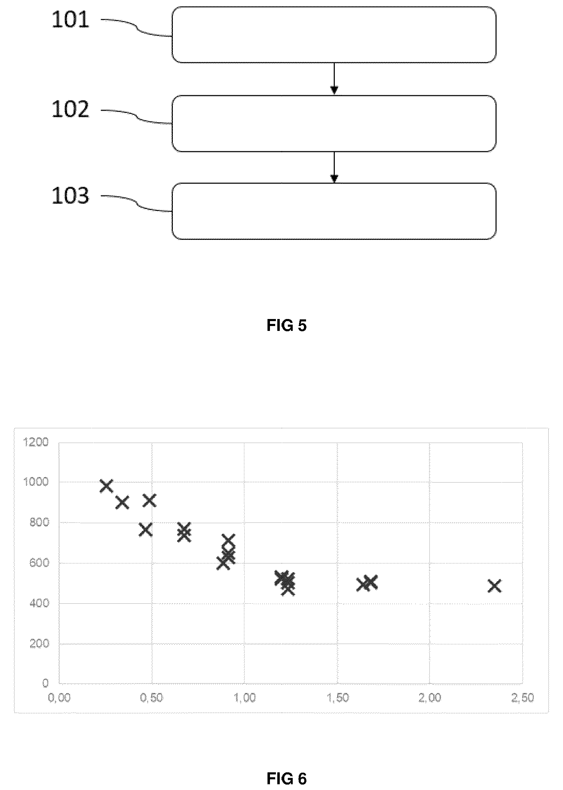

Figur 1 zeigt eine schematische Darstellung einer ersten Ausführungsform eines erfindungsgemäßen Klebebands 1, Figur 2 zeigt eine schematische Darstellung einer zweiten Ausführungsform des erfindungsgemäßen Klebebands 1, Figur 3 zeigt eine schematische Darstellung einer ersten Ausführungsform eines erfindungsgemäßen Verbunds 3, Figur 4 zeigt eine schematische Darstellung einer zweiten Ausführungsform des erfindungsgemäßen Verbunds 3, Figur 5 zeigt eine schematische Darstellung einer Ausführungsform eines erfindungsgemäßen Verfahrens zum elektrischen Lösen des erfindungsgemäßen Verbunds 3 , und Figur 6 zeigt ein Streudiagramm in dem die Schlagzähigkeit über das Verhältnis von verschiedenen Beispielen von Klebebändern dargestellt ist.

Die in Figur 1 dargestellte erste Ausführungsform des erfindungsgemäßen Klebebands 1 und die in Figur 2 dargestellte zweite Ausführungsform des erfindungsgemäßen Klebebands 1 weist mehrere miteinander verbundene Schichten auf. Jede Schicht der miteinander verbundenen Schichten erstreckt sich entlang einer entsprechenden senkrecht zu der Bildebene der Figuren 1 und 2 verlaufenen Erstreckungsebene.

Eine erste Schicht 5 der mehreren Schichten ist eine elektrisch lösbare Klebemasseschicht. Außerdem ist mindestens eine zweite Schicht 7 der mehreren Schichten vorgesehen, wobei jede zweite Schicht 7 eine elektrisch leitfähige Trägerschicht ist. Außerdem ist mindestens eine dritte Schicht 9 der mehreren Schichten vorgesehen, wobei jede dritte Schicht 9 eine Klebemasseschicht ist. Die erste Schicht 5 weist eine senkrecht zu einer Erstreckungsebene der ersten Schicht 5 gemessene erste Dicke 11 auf, jede zweite Schicht 7 weist eine senkrecht zu einer Erstreckungsebene der entsprechenden zweiten Schicht 7 gemessene zweite Dicke 13 auf und jede dritte Schicht 9 weist eine senkrecht zu einer Erstreckungsebene der entsprechenden dritten Schicht 9 gemessene dritte Dicke 15 auf.

Sowohl bei der in Figur 1 dargestellten ersten Ausführungsform des erfindungsgemäßen Klebebands 1 als auch bei der in Figur 2 dargestellten zweite Ausführungsform des erfindungsgemäßen Klebebands 1 ist ein Verhältnis der Summe von der ersten Dicke 11 und jeder zweiten Dicke 13 zu der Summe von jeder dritten Dicke 15 gleich oder geringer als 1,0. Es hat sich herausgestellt, dass dann, wenn das Verhältnis der Summe von der ersten Dicke 11 und jeder zweiten Dicke 13 zu der Summe von jeder dritten Dicke 15 gleich oder geringer als 1,0 ist, die Schlagzähigkeit deutlich erhöht werden kann. Insbesondere hat sich herausgestellt, dass bei einem Verhältnis von gleich oder geringer als 1,0, eine weitere Verringerung des Verhältnisses zu einer weiteren Erhöhung der Schlagzähigkeit führt. Bevorzugt ist das Verhältnis größer als 0,1. Ein Verhältnis von größer 0,1 gewährleistet, dass die elektrische Lösbarkeit der elektrisch lösbaren Klebemasseschicht der ersten Schicht und die elektrische Leitfähigkeit der elektrisch leitfähigen Trägerschicht der zweiten Schicht besonders zuverlässig gewährleistet ist. Bevorzugt ist das Verhältnis größer als 0,1 und gleich oder geringer als 1,0. Ein Verhältnis größer als 0,1 und gleich oder geringer als 1,0 hat eine besonders hohe Schlagzähigkeit des Klebebands gewährleistet und gleichzeitig die elektrische Lösbarkeit der elektrisch lösbaren Klebemasseschicht der ersten Schicht und die elektrische Leitfähigkeit der elektrisch leitfähigen Trägerschicht der zweiten Schicht besonders zuverlässig gewährleistet. Besonders bevorzugt ist das Verhältnis größer als 0,25 und gleich oder geringer als 0,95. Ein Verhältnis größer als 0,25 und gleich oder geringer als 0,95 hat eine besonders hohe Schlagzähigkeit des Klebebands gewährleistet und gleichzeitig die elektrische Lösbarkeit der elektrisch lösbaren Klebemasseschicht der ersten Schicht und die elektrische Leitfähigkeit der elektrisch leitfähigen Trägerschicht der zweiten Schicht noch zuverlässiger gewährleistet. Eine besonders hohe Schlagzähigkeit hat sich bei einem Verhältnis von gleich oder geringer als 0,75 eingestellt.

Bei der in Figur 1 dargestellten ersten Ausführungsform des erfindungsgemäßen Klebebands 1 bestehen die mehreren miteinander verbundenen Schichten aus der ersten Schicht 5, einer zweiten Schicht 7 und einer dritten Schicht 9. Die in Figur 1 dargestellte erste Ausführungsform des erfindungsgemäßen Klebebands 1 besteht aus den mehreren miteinander verbundenen Schichten, die wiederum aus der ersten Schicht 5, der zweiten Schicht 7 und der dritten Schicht 9 bestehen.

Bei der in Figur 2 dargestellten zweiten Ausführungsform des erfindungsgemäßen Klebebands 1 bestehen die mehreren miteinander verbundenen Schichten aus der ersten Schicht 5, zwei zweiten Schichten, nämlich einer über der ersten Schicht 5 dargestellten zweiten Schicht 7 und einer unter der ersten Schicht 5 dargestellten zweiten Schicht 7, und zwei dritten Schichten 9, nämlich einer über der ersten Schicht 5 dargestellten dritten Schicht 9 und einer unter der ersten Schicht 5 dargestellten dritten Schicht 9. Die in Figur 2 dargestellte zweite Ausführungsform des erfindungsgemäßen Klebebands 1 besteht aus den mehreren miteinander verbundenen Schichten, die wiederum aus der ersten Schicht 5, zwei zweiten Schichten, nämlich einer über der ersten Schicht 5 dargestellten zweiten Schicht 7 und einer unter der ersten Schicht 5 dargestellten zweiten Schicht 7, und zwei dritten Schichten, nämlich einer über der ersten Schicht 5 dargestellten dritten Schicht 9 und einer unter der ersten Schicht 5 dargestellten dritten Schicht 9 bestehen.

Sowohl bei der in Figur 1 dargestellten ersten Ausführungsform des erfindungsgemäßen Klebebands 1 als auch bei der in Figur 2 dargestellten zweite Ausführungsform des erfindungsgemäßen Klebebands 1 weist die elektrisch lösbare Klebemasseschicht einen Elektrolyt auf. Der Elektrolyt ist eine ionische Flüssigkeit. Bei einer alternativen Ausführungsform ist der Elektrolyt ein Metallsalz. Außerdem weist sowohl bei der in Figur 1 dargestellten ersten Ausführungsform des erfindungsgemäßen Klebebands 1 als auch bei der in Figur 2 dargestellten zweiten Ausführungsform des erfindungsgemäßen Klebebands 1 die elektrisch lösbare Klebemasseschicht eine hitzeaktivierbare Klebemasse auf.

Wie bereits beschrieben zeigt Figur 3 die schematische Darstellung der ersten Ausführungsform des erfindungsgemäßen Verbunds 3 und Figur 4 zeigt die schematische Darstellung der zweiten Ausführungsform des erfindungsgemäßen Verbunds 3. Die erste Ausführungsform des erfindungsgemäßen Verbunds 3 weist die in Figur 1 schematisch dargestellte erste Ausführungsform des erfindungsgemäßen Klebebands 1 auf. Die zweite Ausführungsform des erfindungsgemäßen Verbunds 3 weist die in Figur 2 schematisch dargestellte zweite Ausführungsform des erfindungsgemäßen Klebebands 1 auf. Sowohl die erste Ausführungsform des erfindungsgemäßen Verbunds 3 als auch die zweite Ausführungsform des erfindungsgemäßen Verbunds 3 weist ein erstes Substrat 17 und ein zweites Substrat 19 auf. Bei der in Figur 3 schematisch dargestellten ersten Ausführungsform des erfindungsgemäßen Verbunds 3 ist die erste Schicht 5 des Klebebands 1 mit dem ersten Substrat 17 verbunden und eine dritte Schicht 9 der mindestens einen dritten Schicht 9 des Klebebands 1 ist mit dem zweiten Substrat 19 verbunden. Bei der in Figur 4 schematisch dargestellten zweiten Ausführungsform des erfindungsgemäßen Verbunds 3 ist eine dritte Schicht 9 der mindestens einen dritten Schicht 9 des Klebebands 1 mit dem ersten Substrat 17 verbunden und eine weitere dritte Schicht 9 der mindestens einen dritten Schicht 9 des Klebebands 1 ist mit dem zweiten Substrat 19 verbunden. Innerhalb des Verbunds 3 verbindet also das Klebeband 1 das erste Substrat 17 mit dem zweiten Substrat 19. Durch Bereitstellen der elektrischen Spannung, insbesondere zwischen der zweiten Schicht 7 und dem Substrat 17, und Reduzieren der Klebkraft der elektrisch lösbaren Klebemasseschicht können dann das erste Substrat 17 und das zweite Substrat 19 wieder voneinander gelöst werden. Das gezielte Lösen des ersten Substrats und des zweiten Substrats voneinander kann auch als "Debonding-on-Demand" bezeichnet werden. Somit kann mithilfe des Klebebands beispielsweise die Reparatur und das Recycling von Komponenten, die mithilfe des Klebebands miteinander verbunden werden vereinfacht werden.

Wie bereits beschrieben zeigt Figur 5 eine schematische Darstellung einer Ausführungsform des erfindungsgemäßen Verfahrens zum elektrischen Lösen des erfindungsgemäßen Verbunds 3. In einem ersten Verfahrensschritt 101 wird ein erster Abschnitt des Verbunds 3 mit einem ersten Abschnitt einer Spannungsquelle kontaktiert. Außerdem wird in dem ersten Verfahrensschritt 101 ein zweiter Abschnitt des Verbunds 3 mit einem zweiten Abschnitt der Spannungsquelle kontaktiert. In einem zweiten Verfahrensschritt 102 wird eine elektrische Spannung mithilfe der Spannungsquelle bereitgestellt, sodass die elektrische Spannung zwischen dem ersten Abschnitt des Verbunds und dem zweiten Abschnitt des Verbunds anliegt. In einem dritten Verfahrensschritt 103 wird der erste Abschnitt der Spannungsquelle von dem ersten Abschnitt des Verbunds 3 entfernt. Außerdem wird in dem dritten Verfahrensschritt 103 der zweite Abschnitt der Spannungsquelle von dem zweiten Abschnitt des Verbunds 3 entfernt. Nach dem dritten Verfahrensschritt 103 kann die Spannungsquelle zum elektrischen Lösen eines weiteren Verbunds 3 verwendet werden. Dadurch, dass in dem zweiten Verfahrensschritt 102 eine elektrische Spannung mithilfe der Spannungsquelle bereitgestellt wird, sodass die elektrische Spannung zwischen dem ersten Abschnitt des Verbunds und dem zweiten Abschnitt des Verbunds anliegt, liegt die elektrische Spannung zumindest anteilig auch an der ersten Schicht des Verbunds 3 und somit zumindest anteilig an der elektrisch lösbaren Klebemasseschicht an, sodass durch Bereitstellen der elektrischen Spannung die Klebkraft der elektrisch lösbaren Klebemasseschicht reduziert wird und hierdurch der erste Abschnitt des Verbundes und der zweite Abschnitt des Verbunds leichter voneinander gelöst werden können. Im Vergleich zu der Situation, in der keine elektrische Spannung bereitgestellt wird, muss eine vergleichsweise geringe Kraft zum Lösen des ersten Abschnitts des Verbundes und des zweiten Abschnitts des Verbunds voneinander aufgewendet werden. Diese Kraft wird bevorzugt während des zweiten Verfahrensschritts 102, nach dem zweiten Verfahrensschritt 102 und vor dem dritten Verfahrensschritt 103, während des dritten Verfahrensschritts 103 oder nach dem dritten Verfahrensschritt 103 aufgewendet, sodass der erste Abschnitt des Verbunds und der zweite Abschnitt des Verbunds bevorzugt während des zweiten Verfahrensschritts 102, nach dem zweiten Verfahrensschritt 102 und vor dem dritten Verfahrensschritt 103, während des dritten Verfahrensschritts 103 oder nach dem dritten Verfahrensschritt 103 voneinander gelöst und somit getrennt werden.

Ein weiterer Aspekt der vorliegenden Erfindung ist eine Verwendung jedes bereits beschriebenen Klebebands 1 zum Verkleben von Bauteilen von elektrischen oder elektronischen Geräten, Automobilen oder medizinischen Geräten. Bevorzugt bildet das bereits erwähnte erste Substrat 17 einen ersten Abschnitt des elektrischen oder elektronischen Geräts, des Automobils oder des medizinischen Geräts und das bereits erwähnte zweite Substrat 19 bildet einen zweiten Abschnitt des elektrischen oder elektronischen Geräts, des Automobils oder des medizinischen Geräts.

Für die Klebemasseschicht jeder ersten Schicht 5 und für die Klebemasseschicht jeder dritten Schicht 9 wurde ein Acrylathaftklebstoff mit der Zusammensetzung 47 Gew.-% n-Butylacrylat, 30 Gew.-% Phenoxyethylacrylat, 20 Gew.-% Methylacrylat und 3% Acrylsäure polymerisiert. Ein für radikalische Polymerisationen konventioneller 300 L-Reaktor wurde mit insgesamt 100 kg der Monomeren entsprechend der angegebenen Zusammensetzung sowie 72,4 kg Benzin/Aceton (70:30) befüllt. Nach 45 minütiger Durchleitung von Stickstoffgas unter Rühren wurde der Reaktor auf 58 °C hochgeheizt und 50 g Vazo^{®} 67 hinzugegeben. Anschließend wurde die Manteltemperatur auf 75 °C erwärmt und die Reaktion konstant bei dieser Außentemperatur durchgeführt. Nach 1 h Reaktionszeit wurden wiederum 50 g Vazo^{®} 67 hinzugegeben. Nach 3 h wurde mit 20 kg Benzin/Aceton (70:30) und nach 6 h mit 10,0 kg Benzin/Aceton (70:30) verdünnt. Zur Reduktion der Restinitiatoren wurden nach 5,5 und nach 7 h jeweils 0,15 kg Perkadox^{®} 16 hinzugegeben. Die Reaktion wurde nach 24 h Reaktionszeit abgebrochen und auf Raumtemperatur abgekühlt. Die Lösung wurde auf einen Feststoffgehalt von 38 Gew.-% eingestellt. Das mittlere Molekulargewicht beträgt Mw = 768.000 g/mol und die Polydispersität beträgt D (Mw/Mn) = 8,8. Zur Vernetzung wird in allen Beispielen 0,2 Teile Aluminiumchelat bezogen auf den Anteil Acrylat zugesetzt.

Wie bereits beschrieben ist die erste Schicht 5 der mehreren Schichten eine elektrisch lösbare Klebemasseschicht. Im Zusammenhang mit der vorliegenden Erfindung ist unter einer elektrisch lösbaren Klebemasseschicht bevorzugt eine Klebemasseschicht zu verstehen, bei der dann, wenn die Klebemasseschicht mit einer anderen Komponente, wie beispielsweise mit einer zweiten Schicht 7 oder mit mehreren zweiten Schichten, verbunden ist und eine Klebkraft durch diese Verbindung definiert ist, diese Klebkraft größer als eine Klebkraftschwelle ist und, nachdem eine elektrische Spannung zwischen einem ersten Abschnitt der Klebemasseschicht und einem zweiten Abschnitt der Klebemasseschicht angelegen hat, die Klebkraft geringer als die Klebkraftschwelle ist. Für später noch im Detail beschriebene Beispiele kann die elektrisch lösbare Klebemasseschicht unterschiedlich ausgebildet sein.

Für die Herstellung der elektrisch lösbaren Klebemasseschicht der ersten Schicht 5 gemäß einem ersten Ausführungsbeispiel der elektrisch lösbaren Klebemasseschicht der ersten Schicht 5 wurden 100 Teile des bereits beschriebenen Acrylathaftklebstoffs (gerechnet ohne Lösemittel) mit 7 Teilen 1-Ethyl-3-methylimidazolium-bis(trifluormethylsulfonyl)imid (EMIM-TFSI) sowie 3,5 Teilen PEG400 versetzt. Der mit 7 Teilen 1-Ethyl-3-methylimidazolium-bis(trifluormethylsulfonyl)imid (EMIM-TFSI) sowie 3,5 Teilen PEG400 versetzte Acrylathaftklebstoff wurde auf eine silikonisierte Polyesterfolie (Trennliner) aufgetragen und bei 120°C für 15 Minuten getrocknet. Jede erste Dicke 11 entspricht einer Schichtdicke nach Trocknung. Jede erste Schicht weist einen Modul G' von 0,06 MPa bei 23 °C und 1 Hz auf.

Für die Herstellung der elektrisch lösbaren Klebemasseschicht der ersten Schicht 5 gemäß einem zweiten Ausführungsbeispiel der elektrisch lösbaren Klebemasseschicht der ersten Schicht 5, wobei die elektrisch lösbare Klebemasseschicht eine aktivierbare Klebemasseschicht ist, wurden 87,0 Gew.-%, bezogen auf die spätere Gesamtmenge der Klebemasse ohne Lösungsmittel, Desmomelt^{®} 530 (Polyurethan) in MEK gelöst. Anschließend wurden 10,0 Gew.-% Dancure^{®} 999 hinzugegeben und intensiv mit dem gelösten Polyurethan vermischt. Dann wurden 3,0 Gew. % der ionischen Flüssigkeit 1-Ethyl-3-methylimidazolium-bis(trifluormethylsulfonyl)imid (EMIM-TFSI) zugegeben und ebenfalls intensiv vermischt. Die Lösung wurde auf einen Feststoffgehalt von 38 Gew.-% eingestellt. Die getrocknete und bei 100 °C über 5 min bei einem Duck von 1 MPa in einer Heizpresse aktivierte Klebstoffschicht weist einen Modul G' von 1,7 MPa bei 23 °C und 1 Hz auf.

Für die Herstellung der elektrisch lösbaren Klebemasseschicht der ersten Schicht 5 gemäß einem dritten Ausführungsbeispiel der elektrisch lösbaren Klebemasseschicht der ersten Schicht 5 wurden 100 Teile des bereits beschriebenen Acrylathaftklebstoffs (gerechnet ohne Lösemittel) wurde mit 7 Teilen 1-Ethyl-3-methylimidazolium-bis(trifluormethylsulfonyl)imid (EMIM-TFSI), 3,5 Teilen PEG400 sowie 0,75 Teilen Mikroballons des Typs Nouryon 920 DU 40 versetzt, wie K1 beschichtet und getrocknet. Abschließend wurden die Mikroballons bei einer Temperatur von 150 °C für 2 min expandiert. Es wurden Schichten verschiedener Schichtdicke nach Trocknung und Expansion hergestellt. Es hat sich herausgestellt, dass sich bei Klebebändern, bei denen die elektrisch lösbare Klebemasseschicht der ersten Schicht 5 gemäß dem dritten Ausführungsbeispiel ausgebildet ist, im Wesentlichen die gleichen Eigenschaften eingestellt haben, insbesondere in Bezug auf die Schlagzähigkeit, wie es bei Klebebändern der Fall ist, bei denen die elektrisch lösbare Klebemasseschicht der ersten Schicht 5 gemäß dem ersten Ausführungsbeispiel ausgebildet ist. Es kann also insbesondere geschlussfolgert werden, dass bei Klebebändern mit elektrisch lösbaren Klebemassenschichten das Einstellen des Verhältnisses einen wesentlich größeren Einfluss auf die Schlagzähigkeit und somit auf die mechanische Robustheit des Klebebands hat als es beispielsweise bei konventionellen/dem Fachmann geläufigen Maßnahmen zur Erhöhung der Schlagzähigkeit, wie das Schäumen mit Microballons, der Fall ist. Insbesondere ist der Einfluss der Microballons auf die Schlagzähigkeit geringer als der Einfluss des gezielten Einstellens des Verhältnisses sowohl bei Verhältnissen von gleich oder kleiner als 1,0 (siehe Vergleich von Beispielen 5 und 6 und Vergleich von Beispielen 8, 9 und 10) als auch bei Verhältnissen von größer als 1,0 (siehe Vergleich von Beispielen 11 und 12, Vergleich von Beispielen 13, 14 und 15 und Vergleich von Beispiele 17 und 18). So ist beispielsweise anhand der später noch im Detail beschriebenen Beispiele in Tabelle 2 zu erkennen, dass ein Einstellen des Verhältnisses zu einer Änderung der Schlagzähigkeit von mehreren hundert mJ führt und ein Hinzufügen von Microballons eine Änderung der Schlagzähigkeit von weniger als hundert mJ hervorruft.

Wie bereits beschrieben ist jede zweite Schicht 7 eine elektrisch leitfähige Trägerschicht. Für die später noch im Detail beschriebenen Beispiele ist die elektrisch leitfähige Trägerschicht jeweils identisch ausgebildet. Es wurde eine einseitig aluminiumbedampfte, 12 µm dicke PET-Folie der Fa. Hueck verwendet, die optische Dichte der Folie mit Aluminiumschicht betrug etwa 1,9.

Wie bereits beschrieben ist jede dritte Schicht 9 eine Klebemasseschicht. Für die später noch im Detail beschriebenen Beispiele ist die Klebemasseschicht jeweils identisch ausgebildet. Für die Herstellung der Klebemasseschicht jeder dritten Schicht 9 wurden 100 Teile des bereits beschriebenen Acrylathaftklebstoffs (gerechnet ohne Lösemittel) mit 0,75 Teilen Mikroballons des Typs Nouryon 920 DU 40 versetzt. Der mit den Mikroballons versetzte Acrylathaftklebstoff wurde auf eine silikonisierte Polyesterfolie (Trennliner) aufgetragen und bei 120°C für 15 Minuten getrocknet. Abschließend wurden die Mikroballons bei einer Temperatur von 150 °C für zwei Minuten expandiert. Jede dritte Dicke 15 entspricht einer Schichtdicke nach Trocknung und Expansion der Mikroballons. Jede dritte Schicht 9 weist einen Modul G' von 0,07 MPa bei 23 °C und 1 Hz auf. Die dritte Schicht 9 weist eine Klebemasseschicht auf, die elektrisch nicht lösbar ist.

In der folgenden Tabelle (Tabelle 1) sind verschiedene im Zusammenhang mit der vorliegenden Erfindung verwendete Materialien dargestellt.

**Tabelle 1:**

| **Verwendete Bezeichnung / Handelsname** | **Anbieter** | **Spezifizierung** | **Funktion** |
|---|---|---|---|
| EMIM-TFSI | lolitec | 1-Ethyl-3-methylimidazolium-bis(trifluormethylsulfonyl) imid | Elektrolytkomponente |
| 920 DU 40 | Nouryon | Expandierbare Microballons | Schlagzähigkeitsmodifizierer |
| PEG 400 | Merck | Polyethylenglycol mit Mw=400 | Elektrolytkomponente |
| | | | |
| Desmomelt^{®} 530 | Covestro AG, Leverkusen, Deutschland | hydroxy-terminiertes, weitgehend lineares, thermoplastisches, stark kristallisierendes Polyurethan-Elastomer | Polymerkomponente |
| Dancure^{®} 999 | Danquinsa GmbH | 2,4-dioxo-1,3-diazetidin-1,3-bis(4-methyl-m-phenylen)-diisocyanate | Vernetzer |
| | | | |
| MEK | Shell | Methylethylketon; CAS 78-93-3 | Lösungsmittel |

In der folgenden Tabelle (Tabelle 2) sind Verhältnisse, Schlagzähigkeiten, Anzahlen der Schichten, Schichtaufbau und Dicken der jeweiligen Schichten für beispielhafte Klebebänder geordnet (nach aufsteigendem Verhältnis dargestellt). In der Spalte Schichtaufbau bedeuten (5) = elektrisch lösbare Klebemasseschicht - (a) mit Acrylathaftklebstoff (siehe erstes Ausführungsbeispiel), (b) mit aktivierbarer Klebemasseschicht (siehe zweites Ausführungsbeispiel), (c) mit Acrylathaftklebstoff mit Mikroballons (siehe drittes Ausführungsbeispiel); (7) = elektrisch leitfähige Trägerschicht; und (9) = Klebemasseschicht mit Acrylathaftklebstoff mit Mikroballons; wie bereits oben ausführlich beschrieben.

**Tabelle 2:**

| Bsp. | Verhältnis | DuPont Schlagzähigkeit (mJ) | Anzahl Schichten | Schichtaufbau | Dicken der Schichten (µm) |
|---|---|---|---|---|---|
| erfindungsgemäße Beispiele | | | | | |
| 1 | 0,26 | 984 | 3 | 5(b)/ 7 / 9 | 15 / 12 / 105 |
| 2 | 0,34 | 902 | 5 | 9 / 7 / 5(b) / 7 / 9 | 50 / 12 / 10 / 12 / 50 |
| 3 | 0,47 | 767 | 3 | 5(b) / 7 / 9 | 30 / 12 / 90 |
| 4 | 0,49 | 909 | 5 | 9 / 7 / 5(a) / 7 /9 | 45 / 12 / 20 / 12 / 45 |
| 5 | 0,68 | 738 | 5 | 9 / 7 / 5(a) / 7 /9 | 40 / 12 / 30 / 12 / 40 |
| 6 | 0,68 | 768 | 5 | 9 / 7 / 5(c) / 7 / 9 | 40 / 12 / 30 / 12 / 40 |
| 7 | 0,89 | 601 | 3 | 5(b) / 7 / 9 | 50 / 12 / 70 |
| 8 | 0,91 | 712 | 5 | 9 / 7 / 5(b) / 7 / 9 | 35 / 12 / 40 / 12 / 35 |
| 9 | 0,91 | 651 | 5 | 9 / 7 / 5(a) / 7 /9 | 35 / 12 / 40 / 12 / 35 |
| 10 | 0,91 | 629 | 5 | 9 / 7 / 5(c) / 7 / 9 | 35 / 12 / 40 / 12 / 35 |

| Nicht erfindungsgemäße Beispiele | | | | | |
|---|---|---|---|---|---|
| 11 | 1,20 | 532 | 3 | 5(c) / 7 / 9 | 60 / 12 / 60 |
| 12 | 1,20 | 521 | 3 | 5(b) / 7 / 9 | 60 / 12 / 60 |
| 13 | 1,23 | 503 | 5 | 9 / 7 / 5(c) / 7 / 9 | 30 / 12 / 50 / 12 / 30 |
| 14 | 1,23 | 470 | 5 | 9 / 7 / 5(b) / 7 / 9 | 30 / 12 / 50 / 12 / 30 |
| 15 | 1,23 | 521 | 5 | 9 / 7 / 5(a) / 7 /9 | 30 / 12 / 50 / 12 / 30 |
| 16 | 1,64 | 493 | 3 | 5(c) / 7 / 9 | 70 / 12 / 50 |
| 17 | 1,68 | 508 | 5 | 9 / 7 / 5(c) / 7 / 9 | 25 / 12 / 60 / 12 / 25 |
| 18 | 1,68 | 502 | 5 | 9 / 7 / 5(a) / 7 /9 | 25 / 12 / 60 / 12 / 25 |
| 19 | 2,35 | 487 | 5 | 9 / 7 / 5(a) / 7 / 9 | 20 / 12 / 70 / 12 / 20 |

Im Folgenden wird auf die Beispiele 1 bis 19 im Detail eingegangen. Da für die Beispiele 1 bis 10 das Verhältnis gleich oder geringer als 1,0 ist, können die Beispiele 1 bis 10 auch als erfindungsgemäße Beispiele bezeichnet werden. Da für die Beispiele 11 bis 19 das Verhältnis größer als 1,0 ist, können die Beispiele 11 bis 19 auch als nicht erfindungsgemäße Beispiele bezeichnet werden.

### Beispiel 1:

Das in Tabelle 2 dargestellte Beispiel 1 des Klebebands 1 entspricht der in Figur 1 dargestellten ersten Ausführungsform des erfindungsgemäßen Klebebands 1. Das Klebeband 1 gemäß Beispiel 1 besteht aus drei Schichten, nämlich aus der ersten Schicht 5, der zweiten Schicht 7 und der dritten Schicht 9. Die erste Dicke 11 entspricht 15 µm, die zweite Dicke 13 entspricht 12 µm und die dritte Dicke 15 entspricht 105 µm. Aus der ersten Dicke 11, der zweiten Dicke 13 und der dritten Dicke 15 ergibt sich ein Verhältnis von 0,26 ((15 + 12)/105 = 0,26). Die ermittelte DuPont-Schlagzähigkeit entspricht 984 mJ. Die erste Schicht 5 weist das bereits beschriebene zweite Ausführungsbeispiel der elektrisch lösbaren Klebemasseschicht der ersten Schicht 5 auf. Das Beispiel 1 des Klebebands 1 kann in der in Figur 3 dargestellten ersten Ausführungsform des erfindungsgemäßen Verbunds 3 verwendet werden.

### Beispiel 2:

Das in Tabelle 2 dargestellte Beispiel 2 des Klebebands 1 entspricht der in Figur 2 dargestellten zweiten Ausführungsform des erfindungsgemäßen Klebebands 1. Das Klebeband 1 gemäß Beispiel 2 besteht aus fünf Schichten, nämlich aus der ersten Schicht 5, zwei zweiten Schichten, nämlich einer auf einer ersten Seite der ersten Schicht angeordneten zweiten Schicht 7 und einer auf einer der ersten Seite gegenüberliegenden zweiten Seite der ersten Schicht 5 angeordneten zweiten Schicht7, und zwei dritten Schichten, nämlich einer auf der ersten Seite der ersten Schicht 5 angeordneten dritten Schicht 9 und einer auf der zweiten Seite der ersten Schicht 5 angeordneten dritten Schicht 9. Die erste Dicke 11 entspricht 10 µm, jede zweite Dicke 13 entspricht 12 µm und jede dritte Dicke 15 entspricht 50 µm. Aus der ersten Dicke 11, den zweiten Dicken und den dritten Dicken ergibt sich ein Verhältnis von 0,34 ((10 + 12 + 12)/(50 + 50) = 0,34). Die ermittelte DuPont-Schlagzähigkeit entspricht 902 mJ. Die erste Schicht 5 weist das bereits beschriebene zweite Ausführungsbeispiel der elektrisch lösbaren Klebemasseschicht der ersten Schicht 5 auf. Das Beispiel 2 des Klebebands 1 kann in der in Figur 4 dargestellten zweiten Ausführungsform des erfindungsgemäßen Verbunds 3 verwendet werden.

### Beispiel 3:

Der Aufbau des in Tabelle 2 dargestellten Beispiels 3 des Klebebands 1 entspricht dem Aufbau der in Figur 1 dargestellten ersten Ausführungsform des erfindungsgemäßen Klebebands 1. Das Klebeband 1 gemäß Beispiel 3 besteht aus drei Schichten, nämlich aus der ersten Schicht 5, der zweiten Schicht 7 und der dritten Schicht 9. Die erste Dicke 11 entspricht 30 µm, die zweite Dicke 13 entspricht 12 µm und die dritte Dicke 15 entspricht 90 µm. Aus der ersten Dicke 11, der zweiten Dicke 13 und der dritten Dicke 15 ergibt sich ein Verhältnis von 0,47 ((30 + 12)/90 = 0,47). Die ermittelte DuPont-Schlagzähigkeit entspricht 767 mJ. Die erste Schicht 5 weist das bereits beschriebene zweite Ausführungsbeispiel der elektrisch lösbaren Klebemasseschicht der ersten Schicht 5 auf. Das Beispiel 3 des Klebebands 1 kann in der in Figur 3 dargestellten ersten Ausführungsform des erfindungsgemäßen Verbunds 3 verwendet werden.

### Beispiel 4:

Der Aufbau des in Tabelle 2 dargestellten Beispiels 4 des Klebebands 1 entspricht dem Aufbau der in Figur 2 dargestellten zweiten Ausführungsform des erfindungsgemäßen Klebebands 1. Das Klebeband 1 gemäß Beispiel 4 besteht aus fünf Schichten, nämlich aus der ersten Schicht 5, zwei zweiten Schichten, nämlich einer auf einer ersten Seite der ersten Schicht 5 angeordneten zweiten Schicht 7 und einer auf einer der ersten Seite gegenüberliegenden zweiten Seite der ersten Schicht 5 angeordneten zweiten Schicht 7, und zwei dritten Schichten, nämlich einer auf der ersten Seite der ersten Schicht 5 angeordneten dritten Schicht 9 und einer auf der zweiten Seite der ersten Schicht 5 angeordneten dritten Schicht 9. Die erste Dicke 11 entspricht 20 µm, jede zweite Dicke 13 entspricht 12 µm und jede dritte Dicke 15 entspricht 45 µm. Aus der ersten Dicke 11, den zweiten Dicken und den dritten Dicken ergibt sich ein Verhältnis von 0,49
((20 + 12 + 12)/(45 + 45) = 0,49). Die ermittelte DuPont-Schlagzähigkeit entspricht 909 mJ. Die erste Schicht 5 weist das bereits beschriebene erste Ausführungsbeispiel der elektrisch lösbaren Klebemasseschicht der ersten Schicht 5 auf. Das Beispiel 4 des Klebebands 1 kann in der in Figur 4 dargestellten zweiten Ausführungsform des erfindungsgemäßen Verbunds 3 verwendet werden.

### Beispiel 5:

Der Aufbau des in Tabelle 2 dargestellten Beispiels 5 des Klebebands 1 entspricht dem Aufbau der in Figur 2 dargestellten zweiten Ausführungsform des erfindungsgemäßen Klebebands 1. Das Klebeband 1 gemäß Beispiel 5 besteht aus fünf Schichten, nämlich aus der ersten Schicht 5, zwei zweiten Schichten, nämlich einer auf einer ersten Seite der ersten Schicht 5 angeordneten zweiten Schicht 7 und einer auf einer der ersten Seite gegenüberliegenden zweiten Seite der ersten Schicht 5 angeordneten zweiten Schicht 7, und zwei dritten Schichten, nämlich einer auf der ersten Seite der ersten Schicht 5 angeordneten dritten Schicht 9 und einer auf der zweiten Seite der ersten Schicht 5 angeordneten dritten Schicht 9. Die erste Dicke 11 entspricht 30 µm, jede zweite Dicke 13 entspricht 12 µm und jede dritte Dicke 15 entspricht 40 µm. Aus der ersten Dicke 11, den zweiten Dicken und den dritten Dicken ergibt sich ein Verhältnis von 0,68
((30 + 12 + 12)/(40 + 40) = 0,68). Die ermittelte DuPont-Schlagzähigkeit entspricht 738 mJ.

Die erste Schicht 5 weist das bereits beschriebene erste Ausführungsbeispiel der elektrisch lösbaren Klebemasseschicht der ersten Schicht 5 auf. Das Beispiel 5 des Klebebands 1 kann in der in Figur 4 dargestellten zweiten Ausführungsform des erfindungsgemäßen Verbunds 3 verwendet werden.

### Beispiel 6:

Der Aufbau des in Tabelle 2 dargestellten Beispiels 6 des Klebebands 1 entspricht dem Aufbau der in Figur 2 dargestellten zweiten Ausführungsform des erfindungsgemäßen Klebebands 1. Das Klebeband 1 gemäß Beispiel 6 besteht aus fünf Schichten, nämlich aus der ersten Schicht 5, zwei zweiten Schichten, nämlich einer auf einer ersten Seite der ersten Schicht 5 angeordneten zweiten Schicht 7 und einer auf einer der ersten Seite gegenüberliegenden zweiten Seite der ersten Schicht 5 angeordneten zweiten Schicht 7, und zwei dritten Schichten, nämlich einer auf der ersten Seite der ersten Schicht 5 angeordneten dritten Schicht 9 und einer auf der zweiten Seite der ersten Schicht 5 angeordneten dritten Schicht 9. Die erste Dicke 11 entspricht 30 µm, jede zweite Dicke 13 entspricht 12 µm und jede dritte Dicke 15 entspricht 40 µm. Aus der ersten Dicke 11, den zweiten Dicken und den dritten Dicken ergibt sich ein Verhältnis von 0,68
((30 + 12 + 12)/(40 + 40) = 0,68). Die ermittelte DuPont-Schlagzähigkeit entspricht 768 mJ. Die erste Schicht 5 weist das bereits beschriebene dritte Ausführungsbeispiel der elektrisch lösbaren Klebemasseschicht der ersten Schicht 5 auf. Das Beispiel 6 des Klebebands 1 kann in der in Figur 4 dargestellten zweiten Ausführungsform des erfindungsgemäßen Verbunds 3 verwendet werden.

### Beispiel 7:

Der Aufbau des in Tabelle 2 dargestellten Beispiels 7 des Klebebands 1 entspricht dem Aufbau der in Figur 1 dargestellten ersten Ausführungsform des erfindungsgemäßen Klebebands 1. Das Klebeband 1 gemäß Beispiel 7 besteht aus drei Schichten, nämlich aus der ersten Schicht 5, der zweiten Schicht 7 und der dritten Schicht 9. Die erste Dicke 11 entspricht 50 µm, die zweite Dicke 13 entspricht 12 µm und die dritte Dicke 15 entspricht 70 µm. Aus der ersten Dicke 11, der zweiten Dicke 13 und der dritten Dicke 15 ergibt sich ein Verhältnis von 0,89 ((50 + 12)/70 = 0,89). Die ermittelte DuPont-Schlagzähigkeit entspricht 601 mJ. Die erste Schicht 5 weist das bereits beschriebene zweite Ausführungsbeispiel der elektrisch lösbaren Klebemasseschicht der ersten Schicht 5 auf. Das Beispiel 7 des Klebebands 1 kann in der in Figur 3 dargestellten ersten Ausführungsform des erfindungsgemäßen Verbunds 3 verwendet werden.

### Beispiel 8:

Der Aufbau des in Tabelle 2 dargestellten Beispiels 8 des Klebebands 1 entspricht dem Aufbau der in Figur 2 dargestellten zweiten Ausführungsform des erfindungsgemäßen Klebebands 1. Das Klebeband 1 gemäß Beispiel 8 besteht aus fünf Schichten, nämlich aus der ersten Schicht 5, zwei zweiten Schichten, nämlich einer auf einer ersten Seite der ersten Schicht 5 angeordneten zweiten Schicht 7 und einer auf einer der ersten Seite gegenüberliegenden zweiten Seite der ersten Schicht 5 angeordneten zweiten Schicht 7, und zwei dritten Schichten, nämlich einer auf der ersten Seite der ersten Schicht 5 angeordneten dritten Schicht 9 und einer auf der zweiten Seite der ersten Schicht 5 angeordneten dritten Schicht 9. Die erste Dicke 11 entspricht 40 µm, jede zweite Dicke 13 entspricht 12 µm und jede dritte Dicke 15 entspricht 35 µm. Aus der ersten Dicke 11, den zweiten Dicken und den dritten Dicken ergibt sich ein Verhältnis von 0,91
((40 + 12 + 12)/(35 + 35) = 0,91). Die ermittelte DuPont-Schlagzähigkeit entspricht 712 mJ. Die erste Schicht 5 weist das bereits beschriebene zweite Ausführungsbeispiel der elektrisch lösbaren Klebemasseschicht der ersten Schicht 5 auf. Das Beispiel 8 des Klebebands 1 kann in der in Figur 4 dargestellten zweiten Ausführungsform des erfindungsgemäßen Verbunds 3 verwendet werden.

### Beispiel 9:

Der Aufbau des in Tabelle 2 dargestellten Beispiels 9 des Klebebands 1 entspricht dem Aufbau der in Figur 2 dargestellten zweiten Ausführungsform des erfindungsgemäßen Klebebands 1. Das Klebeband 1 gemäß Beispiel 9 besteht aus fünf Schichten, nämlich aus der ersten Schicht 5, zwei zweiten Schichten, nämlich einer auf einer ersten Seite der ersten Schicht 5 angeordneten zweiten Schicht 7 und einer auf einer der ersten Seite gegenüberliegenden zweiten Seite der ersten Schicht 5 angeordneten zweiten Schicht 7, und zwei dritten Schichten, nämlich einer auf der ersten Seite der ersten Schicht 5 angeordneten dritten Schicht 9 und einer auf der zweiten Seite der ersten Schicht 5 angeordneten dritten Schicht 9. Die erste Dicke 11 entspricht 40 µm, jede zweite Dicke 13 entspricht 12 µm und jede dritte Dicke 15 entspricht 35 µm. Aus der ersten Dicke 11, den zweiten Dicken und den dritten Dicken ergibt sich ein Verhältnis von 0,91
((40 + 12 + 12)/(35 + 35) = 0,91). Die ermittelte DuPont-Schlagzähigkeit entspricht 651 mJ. Die erste Schicht 5 weist das bereits beschriebene erste Ausführungsbeispiel der elektrisch lösbaren Klebemasseschicht der ersten Schicht 5 auf. Das Beispiel 9 des Klebebands 1 kann in der in Figur 4 dargestellten zweiten Ausführungsform des erfindungsgemäßen Verbunds 3 verwendet werden.

### Beispiel 10:

Der Aufbau des in Tabelle 2 dargestellten Beispiels 10 des Klebebands 1 entspricht dem Aufbau der in Figur 2 dargestellten zweiten Ausführungsform des erfindungsgemäßen Klebebands 1. Das Klebeband 1 gemäß Beispiel 10 besteht aus fünf Schichten, nämlich aus der ersten Schicht 5, zwei zweiten Schichten, nämlich einer auf einer ersten Seite der ersten Schicht 5 angeordneten zweiten Schicht 7 und einer auf einer der ersten Seite gegenüberliegenden zweiten Seite der ersten Schicht 5 angeordneten zweiten Schicht 7, und zwei dritten Schichten, nämlich einer auf der ersten Seite der ersten Schicht 5 angeordneten dritten Schicht 9 und einer auf der zweiten Seite der ersten Schicht 5 angeordneten dritten Schicht 9. Die erste Dicke 11 entspricht 40 µm, jede zweite Dicke 13 entspricht 12 µm und jede dritte Dicke 15 entspricht 35 µm. Aus der ersten Dicke 11, den zweiten Dicken und den dritten Dicken ergibt sich ein Verhältnis von 0,91
((40 + 12 + 12)/(35 + 35) = 0,91). Die ermittelte DuPont-Schlagzähigkeit entspricht 629 mJ. Die erste Schicht 5 weist das bereits beschriebene dritte Ausführungsbeispiel der elektrisch lösbaren Klebemasseschicht der ersten Schicht 5 auf. Das Beispiel 10 des Klebebands 1 kann in der in Figur 4 dargestellten zweiten Ausführungsform des erfindungsgemäßen Verbunds 3 verwendet werden.

### Beispiel 11:

Der Aufbau des in Tabelle 2 dargestellten Beispiels 11 des Klebebands 1 entspricht dem Aufbau der in Figur 1 dargestellten ersten Ausführungsform des erfindungsgemäßen Klebebands 1. Das Klebeband 1 gemäß Beispiel 11 besteht aus drei Schichten, nämlich aus der ersten Schicht 5, der zweiten Schicht 7 und der dritten Schicht 9. Die erste Dicke 11 entspricht 60 µm, die zweite Dicke 13 entspricht 12 µm und die dritte Dicke 15 entspricht 60 µm. Aus der ersten Dicke 11, der zweiten Dicke 13 und der dritten Dicke 15 ergibt sich ein Verhältnis von 1,20 ((60 + 12)/60 = 1,20). Die ermittelte DuPont-Schlagzähigkeit entspricht 532 mJ. Die erste Schicht 5 weist das bereits beschriebene dritte Ausführungsbeispiel der elektrisch lösbaren Klebemasseschicht der ersten Schicht 5 auf. Das Beispiel 11 des Klebebands 1 kann in der in Figur 3 dargestellten ersten Ausführungsform des erfindungsgemäßen Verbunds 3 verwendet werden.

### Beispiel 12:

Der Aufbau des in Tabelle 2 dargestellten Beispiels 12 des Klebebands 1 entspricht dem Aufbau der in Figur 1 dargestellten ersten Ausführungsform des erfindungsgemäßen Klebebands 1. Das Klebeband 1 gemäß Beispiel 12 besteht aus drei Schichten, nämlich aus der ersten Schicht 5, der zweiten Schicht 7 und der dritten Schicht 9. Die erste Dicke 11 entspricht 60 µm, die zweite Dicke 13 entspricht 12 µm und die dritte Dicke 15 entspricht 60 µm. Aus der ersten Dicke 11, der zweiten Dicke 13 und der dritten Dicke 15 ergibt sich ein Verhältnis von 1,20 ((60 + 12)/60 = 1,20). Die ermittelte DuPont-Schlagzähigkeit entspricht 521 mJ. Die erste Schicht 5 weist das bereits beschriebene zweite Ausführungsbeispiel der elektrisch lösbaren Klebemasseschicht der ersten Schicht 5 auf. Das Beispiel 12 des Klebebands 1 kann in der in Figur 3 dargestellten ersten Ausführungsform des erfindungsgemäßen Verbunds 3 verwendet werden.

### Beispiel 13:

Der Aufbau des in Tabelle 2 dargestellten Beispiels 13 des Klebebands 1 entspricht dem Aufbau der in Figur 2 dargestellten zweiten Ausführungsform des erfindungsgemäßen Klebebands 1. Das Klebeband 1 gemäß Beispiel 13 besteht aus fünf Schichten, nämlich aus der ersten Schicht 5, zwei zweiten Schichten, nämlich einer auf einer ersten Seite der ersten Schicht 5 angeordneten zweiten Schicht 7 und einer auf einer der ersten Seite gegenüberliegenden zweiten Seite der ersten Schicht 5 angeordneten zweiten Schicht 7, und zwei dritten Schichten, nämlich einer auf der ersten Seite der ersten Schicht 5 angeordneten dritten Schicht 9 und einer auf der zweiten Seite der ersten Schicht 5 angeordneten dritten Schicht 9. Die erste Dicke 11 entspricht 50 µm, jede zweite Dicke 13 entspricht 12 µm und jede dritte Dicke 15 entspricht 30 µm. Aus der ersten Dicke 11, den zweiten Dicken und den dritten Dicken ergibt sich ein Verhältnis von 1,23
((50 + 12 + 12)/(30 + 30) = 1,23). Die ermittelte DuPont-Schlagzähigkeit entspricht 503 mJ. Die erste Schicht 5 weist das bereits beschriebene dritte Ausführungsbeispiel der elektrisch lösbaren Klebemasseschicht der ersten Schicht 5 auf. Das Beispiel 13 des Klebebands 1 kann in der in Figur 4 dargestellten zweiten Ausführungsform des erfindungsgemäßen Verbunds 3 verwendet werden.

### Beispiel 14:

Der Aufbau des in Tabelle 2 dargestellten Beispiels 14 des Klebebands 1 entspricht dem Aufbau der in Figur 2 dargestellten zweiten Ausführungsform des erfindungsgemäßen Klebebands 1. Das Klebeband 1 gemäß Beispiel 14 besteht aus fünf Schichten, nämlich aus der ersten Schicht 5, zwei zweiten Schichten, nämlich einer auf einer ersten Seite der ersten Schicht 5 angeordneten zweiten Schicht 7 und einer auf einer der ersten Seite gegenüberliegenden zweiten Seite der ersten Schicht 5 angeordneten zweiten Schicht 7, und zwei dritten Schichten, nämlich einer auf der ersten Seite der ersten Schicht 5 angeordneten dritten Schicht 9 und einer auf der zweiten Seite der ersten Schicht 5 angeordneten dritten Schicht 9. Die erste Dicke 11 entspricht 50 µm, jede zweite Dicke 13 entspricht 12 µm und jede dritte Dicke 15 entspricht 30 µm. Aus der ersten Dicke 11, den zweiten Dicken und den dritten Dicken ergibt sich ein Verhältnis von 1,23
((50 + 12 + 12)/(30 + 30) = 1,23). Die ermittelte DuPont-Schlagzähigkeit entspricht 470 mJ.

Die erste Schicht 5 weist das bereits beschriebene zweite Ausführungsbeispiel der elektrisch lösbaren Klebemasseschicht der ersten Schicht 5 auf. Das Beispiel 14 des Klebebands 1 kann in der in Figur 4 dargestellten zweiten Ausführungsform des erfindungsgemäßen Verbunds 3 verwendet werden.

### Beispiel 15:

Der Aufbau des in Tabelle 2 dargestellten Beispiels 15 des Klebebands 1 entspricht dem Aufbau der in Figur 2 dargestellten zweiten Ausführungsform des erfindungsgemäßen Klebebands 1. Das Klebeband 1 gemäß Beispiel 15 besteht aus fünf Schichten, nämlich aus der ersten Schicht 5, zwei zweiten Schichten, nämlich einer auf einer ersten Seite der ersten Schicht 5 angeordneten zweiten Schicht 7 und einer auf einer der ersten Seite gegenüberliegenden zweiten Seite der ersten Schicht 5 angeordneten zweiten Schicht 7, und zwei dritten Schichten, nämlich einer auf der ersten Seite der ersten Schicht 5 angeordneten dritten Schicht 9 und einer auf der zweiten Seite der ersten Schicht 5 angeordneten dritten Schicht 9. Die erste Dicke 11 entspricht 50 µm, jede zweite Dicke 13 entspricht 12 µm und jede dritte Dicke 15 entspricht 30 µm. Aus der ersten Dicke 11, den zweiten Dicken und den dritten Dicken ergibt sich ein Verhältnis von 1,23
((50 + 12 + 12)/(30 + 30) = 1,23). Die ermittelte DuPont-Schlagzähigkeit entspricht 521 mJ. Die erste Schicht 5 weist das bereits beschriebene erste Ausführungsbeispiel der elektrisch lösbaren Klebemasseschicht der ersten Schicht 5 auf. Das Beispiel 15 des Klebebands 1 kann in der in Figur 4 dargestellten zweiten Ausführungsform des erfindungsgemäßen Verbunds 3 verwendet werden.

### Beispiel 16:

Der Aufbau des in Tabelle 2 dargestellten Beispiels 16 des Klebebands 1 entspricht dem Aufbau der in Figur 1 dargestellten ersten Ausführungsform des erfindungsgemäßen Klebebands 1. Das Klebeband 1 gemäß Beispiel 16 besteht aus drei Schichten, nämlich aus der ersten Schicht 5, der zweiten Schicht 7 und der dritten Schicht 9. Die erste Dicke 11 entspricht 70 µm, die zweite Dicke 13 entspricht 12 µm und die dritte Dicke 15 entspricht 50 µm. Aus der ersten Dicke 11, der zweiten Dicke 13 und der dritten Dicke 15 ergibt sich ein Verhältnis von 1,64 ((70 + 12)/50 = 1,64). Die ermittelte DuPont-Schlagzähigkeit entspricht 493 mJ. Die erste Schicht 5 weist das bereits beschriebene dritte Ausführungsbeispiel der elektrisch lösbaren Klebemasseschicht der ersten Schicht 5 auf. Das Beispiel 16 des Klebebands 1 kann in der in Figur 3 dargestellten ersten Ausführungsform des erfindungsgemäßen Verbunds 3 verwendet werden.

### Beispiel 17:

Der Aufbau des in Tabelle 2 dargestellten Beispiels 17 des Klebebands 1 entspricht dem Aufbau der in Figur 2 dargestellten zweiten Ausführungsform des erfindungsgemäßen Klebebands 1. Das Klebeband 1 gemäß Beispiel 17 besteht aus fünf Schichten, nämlich aus der ersten Schicht 5, zwei zweiten Schichten, nämlich einer auf einer ersten Seite der ersten Schicht 5 angeordneten zweiten Schicht 7 und einer auf einer der ersten Seite gegenüberliegenden zweiten Seite der ersten Schicht 5 angeordneten zweiten Schicht 7, und zwei dritten Schichten, nämlich einer auf der ersten Seite der ersten Schicht 5 angeordneten dritten Schicht 9 und einer auf der zweiten Seite der ersten Schicht 5 angeordneten dritten Schicht 9. Die erste Dicke 11 entspricht 60 µm, jede zweite Dicke 13 entspricht 12 µm und jede dritte Dicke 15 entspricht 25 µm. Aus der ersten Dicke 11, den zweiten Dicken und den dritten Dicken ergibt sich ein Verhältnis von 1,68
((60 + 12 + 12)/(25 + 25) = 1,68). Die ermittelte DuPont-Schlagzähigkeit entspricht 508 mJ. Die erste Schicht 5 weist das bereits beschriebene dritte Ausführungsbeispiel der elektrisch lösbaren Klebemasseschicht der ersten Schicht 5 auf. Das Beispiel 17 des Klebebands 1 kann in der in Figur 4 dargestellten zweiten Ausführungsform des erfindungsgemäßen Verbunds 3 verwendet werden.

### Beispiel 18:

Der Aufbau des in Tabelle 2 dargestellten Beispiels 18 des Klebebands 1 entspricht dem Aufbau der in Figur 2 dargestellten zweiten Ausführungsform des erfindungsgemäßen Klebebands 1. Das Klebeband 1 gemäß Beispiel 18 besteht aus fünf Schichten, nämlich aus der ersten Schicht 5, zwei zweiten Schichten, nämlich einer auf einer ersten Seite der ersten Schicht 5 angeordneten zweiten Schicht 7 und einer auf einer der ersten Seite gegenüberliegenden zweiten Seite der ersten Schicht 5 angeordneten zweiten Schicht 7, und zwei dritten Schichten, nämlich einer auf der ersten Seite der ersten Schicht 5 angeordneten dritten Schicht 9 und einer auf der zweiten Seite der ersten Schicht 5 angeordneten dritten Schicht 9. Die erste Dicke 11 entspricht 60 µm, jede zweite Dicke 13 entspricht 12 µm und jede dritte Dicke 15 entspricht 25 µm. Aus der ersten Dicke 11, den zweiten Dicken und den dritten Dicken ergibt sich ein Verhältnis von 1,68
((60 + 12 + 12)/(25 + 25) = 1,68). Die ermittelte DuPont-Schlagzähigkeit entspricht 502 mJ. Die erste Schicht 5 weist das bereits beschriebene erste Ausführungsbeispiel der elektrisch lösbaren Klebemasseschicht der ersten Schicht 5 auf. Das Beispiel 18 des Klebebands 1 kann in der in Figur 4 dargestellten zweiten Ausführungsform des erfindungsgemäßen Verbunds 3 verwendet werden.

### Beispiel 19:

Der Aufbau des in Tabelle 2 dargestellten Beispiels 19 des Klebebands 1 entspricht dem Aufbau der in Figur 2 dargestellten zweiten Ausführungsform des erfindungsgemäßen Klebebands 1. Das Klebeband 1 gemäß Beispiel 19 besteht aus fünf Schichten, nämlich aus der ersten Schicht 5, zwei zweiten Schichten, nämlich einer auf einer ersten Seite der ersten Schicht 5 angeordneten zweiten Schicht 7 und einer auf einer der ersten Seite gegenüberliegenden zweiten Seite der ersten Schicht 5 angeordneten zweiten Schicht 7, und zwei dritten Schichten, nämlich einer auf der ersten Seite der ersten Schicht 5 angeordneten dritten Schicht 9 und einer auf der zweiten Seite der ersten Schicht 5 angeordneten dritten Schicht 9. Die erste Dicke 11 entspricht 70 µm, jede zweite Dicke 13 entspricht 12 µm und jede dritte Dicke 15 entspricht 20 µm. Aus der ersten Dicke 11, den zweiten Dicken und den dritten Dicken ergibt sich ein Verhältnis von 2,35
((70 + 12 + 12)/(20 + 20) = 2,35). Die ermittelte DuPont-Schlagzähigkeit entspricht 487 mJ. Die erste Schicht 5 weist das bereits beschriebene erste Ausführungsbeispiel der elektrisch lösbaren Klebemasseschicht der ersten Schicht 5 auf. Das Beispiel 19 des Klebebands 1 kann in der in Figur 4 dargestellten zweiten Ausführungsform des erfindungsgemäßen Verbunds 3 verwendet werden.

Die beschriebenen Beispiele 1 bis 19 des Klebebands 1 wurden durch Laminieren der verschiedenen Schichten mit einem konventionellen Laminiergerät mit beheizbaren Rollen hergestellt. Die aluminiumbedampfte Seite des Trägermaterials wurde dabei jeweils mit der elektrisch ablösbaren Klebstoffschicht verbunden. D.h. jede zweite Schicht 7 wurde mit der aluminiumbedampften Seite der elektrisch leitfähigen Trägerschicht der zweiten Schicht 7 mit der elektrisch lösbaren Klebemasseschicht der ersten Schicht 5 verbunden. Die Lamination der Haftklebstoffschichten (Ausführungsbeispiele 1 und 3 der Schicht 5) erfolgte bei Raumtemperatur, die der aktivierbaren Klebstoffschicht (Ausführungsbeispiel 2 der Schicht 5) bei 70 °C. Dabei wurde die aktivierbare Klebstoffschicht nicht aktiviert. Vor dem Laminieren wurden Klebemassenschichten und Trägerschichten mittels Corona (Dosis 40 Ws/m²) vorbehandelt, um die Verankerung auf dem Trägermaterial zu verbessern.

Im Zusammenhang mit der vorliegenden Erfindung werden unterschiedliche Dicken, insbesondere die erste Dicke 11, die zweite Dicke 13 und die dritte Dicke 15, beschrieben. Die Dicke einer Klebemasseschicht, also insbesondere jede erste Dicke 11 und jede dritte Dicke 15, wird durch Bestimmung der Dicke eines bezüglich seiner Länge und seiner Breite definierten Abschnitts der auf einen Liner aufgetragenen Klebemassenschicht bestimmt, indem zunächst die Dicke der Kombination aus Liner und Klebemasseschicht gemessen wird und anschließend die Dicke des Liners von dieser gemessenen Dicke abgezogen wird. Die Dicke des Liners kann dabei bekannt sein oder wird separat ermittelt. Die Dicke der Klebemasseschicht lässt sich über handelsübliche Dickenmessgeräte (Taster-Prüfgeräte) mit Genauigkeiten von geringer als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen. Wie bereits die Dicke einer Klebemasseschicht lässt sich auch die Dicke eines Klebebands 1 (Klebestreifens) und die Dicke eines Trägers oder einer Trägermaterials, also insbesondere jede zweite Dicke 13, analog über handelsübliche Dickenmessgeräte (Taster-Prüfgeräte) mit Genauigkeiten von geringer als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Im Zusammenhang mit der vorliegenden Erfindung werden unterschiedliche Schlagzähigkeiten beschrieben. Zum Bestimmen der Schlagzähigkeiten wird jeweils aus dem zu untersuchenden Klebeband 1 ein quadratischer, rahmenförmiger Proben-Rahmen mit den Außenmaßen 33 mm x 33 mm, einer Stegbreite von 2,0 mm und Innenmaßen (Fensterausschnitt) von 29 mm x 29 mm ausgeschnitten. Dieser Proben-Rahmen wird auf einen Stahl-Rahmen mit den Außenmaßen 45 mm x 45 mm, einer Stegbreite von 10 mm, Innenmaßen (Fensterausschnitt) von 25 mm x 25 mm und einer Dicke von 2 mm geklebt. Auf einer dem Stahl-Rahmen gegenüberliegenden Seite des Probe-Rahmens wurde der Probe-Rahmen mit einem Polycarbonat(PC)-Fenster mit Außenmaßen von 35 mm x 35 mm und einer Dicke von 3 mm geklebt. Der Stahl-Rahmen, der Probe-Rahmen und das PC-Fenster werden derart positioniert, dass im verklebten Zustand die geometrischen Zentren des Stahl-Rahmens, des Probe-Rahmens und des PC-Fensters und die Diagonalen dieser Komponenten jeweils übereinanderliegen (Mitte auf Mitte). Im verklebten Zustand kann die Kombination aus Stahl-Rahmen, Probe-Rahmen und PC-Fenster auch als Verklebung bezeichnet werden. Die Verklebungsflächen betragen also jeweils 248 mm². Die Kombination aus Stahl-Rahmen, Probe-Rahmen und PC-Fenster wird bei Raumtemperatur für 5 s mit einem Druck von 1 MPa gepresst und für 24 Stunden bei 23 °C / 50 % relativer Feuchte gelagert. Zusätzlich wurde bei der elektrisch lösbaren Klebemasseschicht der ersten Schicht 5 gemäß dem zweiten Ausführungsbeispiel der elektrisch lösbaren Klebemasseschicht der ersten Schicht 5 die Kombination aus Stahl-Rahmen, Probe-Rahmen und PC-Fenster bei 100 °C für 5 min unter einem Druck von 1 MPa verpresst und aktiviert. Anschließend wird die Kombination aus Stahl-Rahmen, Probe-Rahmen und PC-Fenster mit den überstehenden Kanten des Stahl-Rahmens derart in eine Probenhalterung gespannt, dass die Kombination aus Stahl-Rahmen, Probe-Rahmen und PC-Fenster waagerecht ausgerichtet ist. Dabei liegt der Stahl-Rahmen an den überstehenden Kanten auf der Probenhalterungen so plan auf, dass das PC-Fenster unterhalb des Stahl-Rahmens frei schwebend (durch das Klebebandmuster gehalten) vorliegt. Die Probenhalterung wird anschließend in die vorgesehene Aufnahme des "DuPont Impact Tester" zentrisch eingesetzt. Der 150 g schwere Schlagkopf wird so eingesetzt, dass die kreisförmige Aufschlaggeometrie mit einem Durchmesser von 24 mm auf die von oben frei zugängliche Fläche des PC-Fensters zentrisch und bündig aufliegt. Auf die so angeordnete Kombination aus Stahl-Rahmen, Probe-Rahmen und PC-Fenster wird senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wird in 5 cm Schritten so lange erhöht, bis die eingebrachte Stoßenergie die Probe durch die Durchschlagbelastung zerstört und das PC-Fenster sich vom Stahl-Rahmen löst. Die Schlagzähigkeit wird dann wie folgt ermittelt und die Energie wie folgt berechnet: Energie E [J] = Höhe[m] * Gewicht[kg] * 9,81 kg/m*s². Für jedes in Tabelle 2 dargestellte Beispiel des Klebebands 1 wurden fünf Proben getestet und der Energiemittelwert als Kennzahl für die Durchschlagzähigkeit angegeben.

Im Zusammenhang mit der vorliegenden Erfindung wird auf Klebkräfte verwiesen. Die Klebkräfte wurden analog ISO 29862 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wurde eine geätzte PET-Folie mit einer Dicke von 50 µm verwendet, wie sie von der Fa. Coveme (Italien) erhältlich ist. Die elektrisch ablösbare Klebstoffschicht wurde bei Klebebändern gemäß Figur 1 (erste Ausführungsform des erfindungsgemäßen Klebebands) auf die Stahlplatte laminiert. Bei Verwendung der aktivierbaren Klebstoffschicht, also der elektrisch lösbaren Klebemasseschicht der ersten Schicht 5 gemäß dem zweiten Ausführungsbeispiel der elektrisch lösbaren Klebemasseschicht der ersten Schicht 5 im Aufbau wurde diese, sofern als Außenschicht vorliegend, bei einer Temperatur von 70 °C auf die Stahlplatte laminiert. In jedem Fall wurde die aktivierbare Klebstoffschicht, also die elektrisch lösbare Klebemasseschicht der ersten Schicht 5 gemäß dem zweiten Ausführungsbeispiel der elektrisch lösbaren Klebemasseschicht der ersten Schicht 5, bei 100 °C für 5 min unter einem Druck von 1 MPa in einem Autoklaven aktiviert. Als Substrat wurden Stahlplatten entsprechend der Norm verwendet. Die Verklebung des Messstreifens wurde dabei mittels einer Anrollmaschine mit 4 kg bei einer Temperatur von 23 °C vorgenommen. Die Klebebänder wurden sofort nach der Applikation bzw. nach dem elektrischen Löseprozess abgezogen. Der Messwert (in N/cm) ergab sich als Mittelwert aus drei Einzelmessungen.

Die elektrische Lösbarkeit der elektrisch lösbaren Klebemasseschicht wurde wie folgt überprüft. Es wurden für jedes in Tabelle 2 dargestellte Beispiel ein Klebeband 1, das jeweils auch als Referenzklebeband bezeichnet werden kann, mit einer Verklebungsbreite von 24 mm hergestellt. Jedes Referenzklebeband wurde so wie das entsprechende in Tabelle 2 dargestellte Beispiel des Klebebands 1 hergestellt, wobei bei jedem Referenzklebeband jede zweite Schicht 7 seitlich ca. 4 cm über die erste Schicht 5 und jede dritte Schicht 9 übersteht, sodass jede elektrisch leitfähige Trägerschicht seitlich ca. 4 cm über die erste Schicht 5 und jede dritte Schicht 9 übersteht. Für den Fall eines wie in Figur 1 dargestellten Aufbaus, wurde die erste Schicht 5 auf eine Stahlplatte gemäß ISO 29862 laminiert. Bei Verwendung des aktivierbaren zweiten Ausführungsbeispiels der Schicht 5 in einem Klebeband 1 gemäß Figur 1 erfolgte die Laminierung bei einer Temperatur von 70 °C in einem Heißlaminator. Bei Verwendung des aktivierbaren zweiten Ausführungsbeispiels der Schicht 5 in einem Klebeband 1 gemäß Figur 1 oder Figur 2 erfolgte nach dem Laminieren eine Aktivierung bei 100 °C über 5 min bei einem Duck von 1 MPa in einem Autoklaven. Anschließend wurde eine elektrische Spannung an die elektrisch lösbare Klebemasseschicht angelegt, indem eine erste Krokodilklemme (Klemmbacken außen mit Gummi isoliert) mit einem Pluspol an einen überstehenden Bereich der zweiten Schicht 7 angebracht wurde und eine zweite Krokodilklemme (Klemmbacken außen mit Gummi isoliert) mit einem Minuspol an die Stahlplatte angebracht wurde oder die erste Krokodilklemme (Klemmbacken außen mit Gummi isoliert) mit dem Pluspol an den überstehenden Bereich der zweiten Schicht 7 angebracht wurde und eine zweite Krokodilklemme (Klemmbacken außen mit Gummi isoliert) mit einem Minuspol an einen überstehenden Bereich einer weiteren zweiten Schicht 7 angebracht wurde. Die elektrische Spannung betrug dabei 12 Volt und wurde für 1 Minute angelegt. Nach Ablauf von 1 Minute wurde die elektrische Spannung entfernt und unmittelbar danach die Klebkraft gemäß der bereits beschriebenen Methode bestimmt. Alle Klebebänder mit der ersten Schicht 5 mit der elektrisch lösbaren Klebemasseschicht wiesen nach dem Anlegen der elektrischen Spannung eine Klebkraft unterhalb von 0,5 N/cm auf, waren also elektrisch lösbar. Die Stahlplatte wies bei den entsprechenden Testmustern keine Rückstände auf. Vor dem Anlegen der elektrischen Spannung wiesen alle Klebebänder mit der elektrisch lösbaren ersten Schicht 5 eine Klebkraft von 3,2 bis 6,8 N/cm auf.

Im Zusammenhang mit der vorliegenden Erfindung wird auf den Speichermodul verwiesen. Der Speichermodul für Klebemassen wird hierbei im oszillatorischen Scherexperiment (Dynamisch mechanische Analyse, DMA) unter Torsionsbelastung bei einer Temperatur von 23 °C und einer Frequenz von 1 1/s bestimmt. Der Test dient der Untersuchung rheologischer Eigenschaften und ist in ISO 6721-10 ausführlich beschrieben. Er wird in einem schergeschwindigkeitskontrollierten Rheometer unter Torsionsbelastung gefahren, wobei eine Platte-Platte-Geometrie mit einem Plattendurchmesser von 25 mm verwendet wird.

Die folgenden Überlegungen stützen den Vorteil, der mithilfe der vorliegenden Erfindung erreicht wird, nämlich dass sich dann, wenn das Verhältnis der Summe von der ersten Dicke und jeder zweiten Dicke zu der Summe von jeder dritten Dicke gleich oder geringer als 1,0 ist, die Schlagzähigkeit des Klebebands durch ein Ändern des Verhältnisses besonders gut beeinflussen lässt.

Wie bereits beschrieben zeigt Figur 6 das Streudiagramm in dem die Schlagzähigkeit über das Verhältnis von verschiedenen Beispielen von Klebebändern dargestellt ist. Die Beispiele entsprechen den in Tabelle 2 dargestellten Beispielen. In dem Streudiagramm ist zu erkennen, dass bei kleineren Verhältnissen eine Änderung des Verhältnisses eine große Änderung der Schlagzähigkeit hervorruft und dass bei größeren Verhältnissen eine Änderung des Verhältnisses keine große Änderung der Schlagzähigkeit hervorruft.

Auch wenn die Verfahrensschritte in einer bestimmten Reihenfolge beschrieben werden, ist die vorliegende Erfindung nicht auf diese Reihenfolge beschränkt. Vielmehr können die einzelnen Verfahrensschritte in beliebiger sinnvoller Reihenfolge, insbesondere auch zumindest abschnittsweise zeitlich parallel zueinander, durchgeführt werden.

Ergänzend sei darauf hingewiesen, dass "aufweisend" keine anderen Elemente oder Schritte ausschließt und "ein" oder _{"}eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste

- 1: Klebeband
- 3: Verbund
- 5: erste Schicht
- 7: zweite Schicht
- 9: dritte Schicht
- 11: erste Dicke
- 13: zweite Dicke
- 15: dritte Dicke
- 17: erstes Substrat
- 19: zweites Substrat

- 101: erster Verfahrensschritt
- 102: zweiter Verfahrensschritt
- 103: dritter Verfahrensschritt

## Patentansprüche

1. Klebeband (1), das mehrere miteinander verbundene Schichten aufweist,
wobei eine erste Schicht (5) der mehreren Schichten eine elektrisch lösbare Klebemasseschicht ist und eine senkrecht zu einer Erstreckungsebene der ersten Schicht (5) gemessene erste Dicke (11) aufweist,
wobei mindestens eine zweite Schicht (7) der mehreren Schichten vorgesehen ist, wobei jede zweite Schicht (7) eine elektrisch leitfähige Trägerschicht ist und eine senkrecht zu einer Erstreckungsebene der entsprechenden zweiten Schicht (7) gemessene zweite Dicke (13) aufweist,
wobei mindestens eine dritte Schicht (9) der mehreren Schichten vorgesehen ist, wobei jede dritte Schicht (9) eine Klebemasseschicht ist und eine senkrecht zu einer Erstreckungsebene der entsprechenden dritten Schicht (9) gemessene dritte Dicke (15) aufweist,
wobei ein Verhältnis der Summe von der ersten Dicke (11) und jeder zweiten Dicke (13) zu der Summe von jeder dritten Dicke (15) gleich oder geringer als 1,0 ist.

2. Klebeband (1) nach Anspruch 1, wobei das Verhältnis größer als 0,1 ist.

3. Klebeband (1) nach einem der vorhergehenden Ansprüche, wobei die mehreren miteinander verbundenen Schichten aus der ersten Schicht (5), einer zweiten Schicht (7) und einer dritten Schicht (9) bestehen.

4. Klebeband (1) nach einem der vorhergehenden Ansprüche, wobei die mehreren miteinander verbundenen Schichten aus der ersten Schicht (5), zwei zweiten Schichten und zwei dritten Schichten bestehen.

5. Klebeband (1) nach einem der vorhergehenden Ansprüche, wobei die elektrisch lösbare Klebemasseschicht einen Elektrolyt aufweist.

6. Klebeband (1) nach Anspruch 5, wobei der Elektrolyt ausgewählt ist aus der Gruppe bestehend aus ionischen Flüssigkeiten und Metallsalzen.

7. Klebeband (1) nach einem der vorhergehenden Ansprüche, wobei die elektrisch lösbare Klebemasseschicht eine hitzeaktivierbare Klebemasse aufweist.

8. Klebeband (1) nach einem der vorhergehenden Ansprüche, wobei die Klebemasseschicht der dritten Schicht elektrisch nicht lösbar ist.

9. Klebeband (1) nach einem der vorhergehenden Ansprüche, wobei die Klebemasseschicht der dritten Schicht geschäumt ist.

10. Verbund (3) mit einem Klebeband (1) nach einem der vorhergehenden Ansprüche, einem ersten Substrat (17) und einem zweiten Substrat (19), wobei die erste Schicht (5) des Klebebands (1) mit dem ersten Substrat (17) verbunden ist und eine dritte Schicht (9) der mindestens einen dritten Schicht (9) des Klebebands (1) mit dem zweiten Substrat (19) verbunden ist oder eine dritte Schicht (9) der mindestens einen dritten Schicht (9) des Klebebands (1) mit dem ersten Substrat (17) verbunden ist und eine weitere dritte Schicht (9) der mindestens einen dritten Schicht (9) des Klebebands (1) mit dem zweiten Substrat (19) verbunden ist.

11. Verfahren zum elektrischen Lösen des Verbunds nach Anspruch 10, wobei das Verfahren die folgenden Schritte aufweist: Kontaktieren eines ersten Abschnitts des Verbunds mit einem ersten Abschnitt einer Spannungsquelle und kontaktieren eines zweiten Abschnitts des Verbunds mit einem zweiten Abschnitt der Spannungsquelle und Bereitstellen einer elektrischen Spannung mithilfe der Spannungsquelle, sodass die elektrische Spannung zwischen dem ersten Abschnitt des Verbunds und dem zweiten Abschnitt des Verbunds anliegt.

12. Verwendung eines Klebebands (1) nach einem der Ansprüche 1 bis 9 zum Verkleben von Bauteilen von elektrischen oder elektronischen Geräten, Automobilen oder medizinischen Geräten.
